# EUROPEAN PATENT SPECIFICATION

(11) **EP 1 765 022 B1**
(45) Date of publication and mention of the grant of the patent: **18.06.2008**
(21) Application number: 05447244.4
(22) Date of filing: 04.11.2005
(51) Int. Cl.: H04Q 3/68, H04Q 3/00

(54) **Improvements in or relating to switching in telecommunications systems**
Verbesserungen in und in Bezug auf Telekommunikationssysteme
Améliorations apportées à des systèmes de télécommunications ou s'y rapportant

(30) Priority: 16.09.2005 GB 0519002
(43) Date of publication of application: 21.03.2007
(73) Proprietor: Tyco Electronics Raychem NV, 3010 Kessel-Lo (BE)
(72) Inventor: Erreygers, Jan, 3390 Tielt-Winge (BE); Wildemeersch, Matthias, 1050 Brussels (BE)
(74) Representative: Jay, Anthony William

(56) References cited:
- EP-A- 1 549 102
- US-A- 4 417 244
- NAKAMURA S ET AL: "LOWER BOUNDS ON CROSSPOINTS IN CONCENTRATORS" IEEE TRANSACTIONS ON COMPUTERS, IEEE SERVICE CENTER, LOS ALAMITOS, CA, US, vol. C-31, no. 12, December 1982 (1982-12), pages 1173-1179, XP000820685 ISSN: 0018-9340

## Description

### Field of the Invention

The present invention relates to a method and apparatus for rearranging connections between a multitude of transmission lines for providing telecommunications services especially to the provision of a permanent new service such as xDSL. Preferred embodiments relate to a method and apparatus for rearranging connections between a first and a second set of lines, e.g. subscriber and service transmission lines.

### Background to the Invention

Traditional telephony systems have relied on a combination of automatic (for example Strowger) and manual (cross-connect jumpering, i.e. using jumper cables to connect) methods to provide a continuous metallic path between two telephone users, so that a conversation could take place.

More recently, electronic switching has replaced some of this connectivity function, specifically for individual telephone conversations, but there has continued to be a requirement for connecting and disconnecting individual pairs of wires at various 'flexibility points' such as street cabinets and exchanges, so that only the pairs of wires connected to subscribing customers are connected to the (expensive) electronic switches.

This remaining connectivity function is still predominantly carried out manually, and there is significant interest in automating the process (e.g. WO01/20922, US6710268, US4833708, US2001/0030521, US6265842, US6253071 and US5456608). However the high cost of automatic systems has prevented their widespread deployment.

Taking a specific prior art example as outlined in WO01/20922 for illustration purposes, the number of cables connected to telecommunications equipment, such as to local exchange for instance, is normally very large. One cable may be comprised of twinned copper wires that connect a subscriber terminal to a line interface board in the local exchange. A main distribution frame (MDF) is often used to terminate the cables. An MDF is a cross-connection frame where incoming cables terminate and can be cross-connected manually to central office telecommunications equipment. An MDF may be placed together with the local exchange, or for instance, in a remote subscriber access node.

One problem is that it becomes desirable sooner or later to rearrange the connections of certain conductors to the local exchange. For instance, a subscriber may have purchased a broadband service and needs to be connected to an ISDN (Integrated Services Digital Network) line interface board instead of to a conventional PSTN (Public Switched Telephone Network) line interface board. Although this rearrangement can be effected manually in the MDF, it necessitates a visit to the access node, i.e. the location in which the MDF is placed.

In order to avoid visiting the access node each time a rearrangement is required, a Metallic Cross-Connect (MXC) is placed between the MDF and the local exchange (or could replace the MDF). The MXC includes a large number of connection points, so called cross-points, arranged in connection matrices, and enables remotely controlled reconnections of connected conductors. A very large number of cross points are required to achieve a coupling that is totally free from congestion, and consequently the MXCs are expensive.

Cross-connects are not solely used in the access network. Digital cross-connects, (DXC) and optical cross-connects (OXC) are used in the transport network to enable conductors to be reconnected between transmission equipment.

As indicated above, the prior art cross-connects have a very large number of cross points as they are arranged to allow the connection of every subscriber transmission line to every service transmission line port (e.g. POTS (Plain Old Telephone Service) port, ADSL Asymmetric Digital Subscriber Line port, DSLAM (Digital Subscriber Line Access Multiplexer) port, ISDN port) in a "any to any" switching relationship i.e. full connectivity.

Concentrators are known, in which inputs are connected to arbitrary outputs by means of switch elements. Concentrators are in common use in central offices and street cabinets of a telephone network.

Attempts have been made to reduce the total number of switches at crosspoints of the matrix and by consequence reduce the overall cost of the concentrator. Most of those topologies use sparse crossbars in which the connections to subscribers do not all have corresponding connections towards all of the network connections. This relies on not all subscribers wanting the service at the same time. The main problem which arises when reducing the total number of switch elements is the increasing blocking probability. In telephone switching systems blocking is annoying but the system can be deblocked by users terminating calls. However, when permanent service connections are to be made this form of deblocking is not very suitable.

US 4,750,202 describes an optimum way of connecting services when using a sparse crossbar switching arrangement. It is said to be non-blocking but in fact the switching arrangement will block with some certainty, e.g. only 9 calls placed by random selection from 125 subscribers may be switched through 25 outputs without blocking, when each input line is connectable to one of five of the output lines.

EP 1549102 describes a method and apparatus for a non-blocking multistage optical switch using crosspoint switches for performing group switching in DWDM optical networks. One embodiment is an N x N three-stage group connector with N inputs and N outputs, wherein the N outputs are divided into r output groups, each group including n outputs such that r = N / n. The group connector comprises a first stage comprising r n x m crossbar switch modules, wherein m is greater than or equall to n-1; a second stage comprising m r x r crossbar switch modules; and a third stage comprising r M x N concentrator switch modules. The switches used are any-to-any switches requiring a very large number of individual switches.

### Summary of the Present Invention

It is the objective of this invention to provide a solution that has a comparatively low cost of ownership, and therefore justifies the automation of the majority of the remaining manual processes.

In a first aspect the present invention provides a cross-connect device: comprising a plurality of first transmission path inputs/outputs (N) and a plurality of second transmission path inputs/outputs (M), a remotely actuated cross connection arrangement to remotely connect selective first transmission path inputs (N) to selective second transmission path inputs (M), and a controller for the remotely actuated cross connection arrangement, the controller being adapted to execute a deblocking algorithm.

The present invention also provides a cross-connect device having a plurality of N first transmission path input/output terminals and a plurality of M second transmission path input/output terminals, the device having a remotely actuated cross-connection arrangement comprising:
a first sparse cross-bar arrangement having first connection lines connected to the plurality of first transmission path input/output terminals and second connection lines connected to the plurality of second transmission path input/output terminals and a plurality of first switch elements for connecting selective ones of the first connection lines to selective ones of the second connection lines,
a second sparse cross-bar arrangement having third connection lines connected to at least some of the first connection lines, and fourth connection lines and a plurality of second switch elements for connecting selective ones of the third connection lines to selective ones of the fourth connection lines, and
at least a third sparse cross-bar arrangement having fifth connection lines connected to at least some of the fourth connection lines, and sixth connection lines and a plurality of third switch elements for connecting selective ones of the fifth connection lines to selective one of the sixth connection lines, the device having selectable connection paths between the sixth connection lines and at least some of the second transmission path input/output terminals, whereby the total number of switching elements for the at least first to third sparse cross-bar arrangements is less than N x M. Reduction in the number of switching elements below N x M has the advantage of cost savings while still maintaining a non-blocking cross-connect device.

The above cross connection arrangement comprises a plurality of connection paths between the first transmission path inputs/outputs (N) and second transmission path inputs/outputs (M) which can be selectively remotely actuated to cross connect a selective first transmission path input/output to a selective second transmission path input/output, and wherein the number of connection paths in the first sparse crossbar represent a percentage less than 50% of full connectivity.

At least a fourth sparse cross-bar arrangement can also be provided having seventh connection lines connected to at least some of the sixth connection lines, and eighth connection lines and a plurality of fourth switch elements for connecting selective ones of the seventh connection lines to selective ones of the eighth connection lines, the eighth connection lines being connected to at least some of the second connection lines, whereby the total number of switching elements of the first to fourth sparse cross-bar is less than N x M. The addition of a fourth sparse cross-bar provides additional switching possibilities which helps to obtain a non-blocking cross-connect.

Preferably, in the cross-connect device the total number of switching elements is less than 50%, less than 40%, less than 30%, or less than 20% of N x M. The present invention based on the surprising finding that with a low number of switches arranged in a switching matrix comprising R stages where R is greater than or equal to 3, a substantially non-blocking functionality can be obtained.

In the switching matrix there can be S third lines and T fourth lines, U fifth lines and V sixth lines and the relationships between N, M, S, T, U, and V are:
S is less than or equal to N,
T is less than or equal to S,
U or V are less than or equal to T.

If a fourth stage is added there are W seventh lines and X eighth lines, and W and X are less than or equal to T.

In addition, S can be less than N and for the first connection lines which are not connected to the second sparse cross-bar arrangement, connections to the second transmission path input/output terminals is only possible using the first switching elements. This has the advantage that for a certain number of inputs, there is already a possible output and the number of switches in the first stage is lower.

One design rule which can be of advantage is that the second sparse cross-bar arrangement has first and second non-overlapping sets of fourth connection lines and each third connection line can be connected to a fourth connection line in either the first or second sets by the second switching elements. This improves the ability to find and connect to an idle output.

Another design rule is that the third and fourth sparse cross-bar arrangements (if present) are adapted so that a fourth connection line from the first set can be connected to a third set of the second transmission path input/output terminals and a fourth connection line from the second set can be connected to a fourth set of the second transmission path input/output terminals. Again this improves the possibility of obtaining a connection between the inputs and outputs.

Preferably, the device is adapted to implement a non-blocking rerouting by an automatic process. This allows remote switching and deblocking.

The non-blocking rerouting can be by rearrangement. By allowing rearrangement of which switches are activated, the opportunities to make a through connection are increased.

The rearrangement can be a chain of rearrangements. For instance multiple switches may be deactivated/activated in order to rearrange the switching matrix.

The device may be arranged to bridge the connection between a subscriber terminal and a telecommunications service. For example, one or more of the first transmission path input/output terminals can be arranged to provide connection to subscriber transmission lines and the one or more of the second transmission path input/output terminals can be arranged to provide connection for service transmission lines.

In another aspect the present invention provides a method of adapting in situ a telecommunications network apparatus, the apparatus having a plurality of N first transmission path input/output terminals and a plurality of M second transmission path input/output terminals, and a remotely actuated cross-connection arrangement comprising:
a first sparse cross-bar arrangement having first connection lines connected to the plurality of first transmission path input/output terminals and second connection lines connected to the plurality of second transmission path input/output terminals and a plurality of first switch elements for connecting selective ones of the first connection lines to selective ones of the second connection lines,
a second sparse cross-bar arrangement having third connection lines connected to at least some of the first connection lines, and fourth connection lines and a plurality of second switch elements for connecting selective ones of the third connection lines to selective ones of the fourth connection lines, and
at least a third sparse cross-bar arrangement having fifth connection lines connected to at least some of the fourth connection lines, and sixth connection lines and a plurality of third switch elements for connecting selective ones of the fifth connection lines to selective one of the sixth connection lines, the arrangement having selectable connection paths between the sixth connection lines and at least some of the second transmission path input/output terminals, the method comprising:
   activating a first switching element to provide a first connection path between a first transmission path input/output terminal and a second transmission path input/output terminal,
   and if this is not possible, activating selective ones of the second to at least third switching elements to provide a second connection path between a first transmission path input/output terminal and a second transmission path input/output terminal.

Another rerouting step could be: determining if there is an idle second transmission path input/output terminal and if so, determining if this idle second transmission path input/output terminal can be connected to a busy first transmission path input/output terminal through a third connection path of the cross-connection arrangement, and if so rearranging the busy first transmission path input/output terminal to be connected to the idle second transmission path input/output terminal via the third connection path followed by activating selective ones of the first to at least third switching elements to provide the first or second connection path between a first transmission path input/output terminal and a second transmission path input/output terminal. A first connection path represents a connection made through the first sparse crossbar; a second connection path represents a connection made through the second and at least third sparse crossbar.

Another rerouting step can be: selecting a busy a first transmission path input/output terminal and de-selecting the first switching element which provides the connection of the busy first terminal to a busy second transmission path input/output terminal, and activating another first switching element to provide a connection path between the busy first transmission path input/output terminal and another idle second transmission path input/output terminal, and activating a first switching element to provide the first connection path between a first transmission path input/output terminal and a second transmission path input/output terminal, and, if this is not possible, activating selective ones of the second to at least third switching elements to provide a second connection path between a first transmission path input/output terminal and an idle second transmission path input/output terminal.

If the previous steps have failed, a further rerouting step can be determining if there is an idle second transmission path input/output terminal and if so, determining if this idle second transmission path input/output terminal can be connected to a busy first transmission path input/output terminal through a third connection path, and if so rearranging the busy first transmission path input/output terminal to be connected to the idle second transmission path input/output terminal via the third connection path followed by activating selective ones of the first to at least third switching elements to provide the first or second connection path between a first transmission path input/output terminal and a second transmission path input/output terminal.If these previous steps have failed, a further rerouting step can be selecting a busy a first transmission path input/output terminal and de-selecting the first switching element which provides the connection of the busy first terminal to a second transmission path input/output terminal, and activating second and at least third switching elements to provide the connection path between the busy first transmission path input/output terminal and a second transmission path input/output terminal, followed by
activating selective ones of the first to at least third switching elements to provide the first or second connection path between a first transmission path input/output terminal and a second transmission path input/output terminal.

Providing the first or second connection includes a chain of rearrangements in which more than one rearrangement of the activation of switching elements is carried out in the second sparse cross-bar.

The present invention also provides a computer program product comprising code segments for carrying out any of the methods of the present invention. The computer program product can be stored on a machine readable storage medium such as a hard disk, diskettes, tape storage media, optical disks such as CD-ROM or DVD-ROM, solid state memory, etc.

The present invention also includes a telecommunications system comprising a device according to the present invention or which implements a method according to the present invention.

With full connectivity being defined by NxM connection paths, the present invention provides substantially less connection paths but still provides a high probability of connection between the first and second inputs, given the comparatively small number of cross connections required at the outset and also over a period of time following initial installation of the network apparatus.

In preferred embodiments, the number of switching elements may represent any one percentage less than 50% of the number of switch elements required for full connectivity (i.e. les than 49, 48, 47 .... 3, 2, 1) in a single crossbar arrangement. Preferably, the number of switching elements may represent a percentage between 50 and 5, 50 and 10, 50 and 15, 50 and 20, 45 and 20, 40 and 20, 35 and 20, 30 and 20, or 25 and 15 % of the number of switching elements required for full connectivity in a single crossbar arrangement. Preferably, the number of switching elements may represent a percentage between 40 and 5, 40 and 10, 40 and 15, 35 and 15, 30 and 15, 25 and 15, or 25 and 20 % of the number of switching elements required for full connectivity in a single crossbar arrangement. Preferably, the number of connection paths may represent a percentage between 30 and 5, 30 and 10, 30 and 15, 25 and 15 of the number of switching elements required for full connectivity in a single crossbar arrangement.
Although a less than NxM number of connection paths can lead to a blocking arrangement as more and more of the connection paths are used to connect first and second inputs (N, M), any blocks can be subsequently unblocked automatically by the methods of the present invention or they may be manually unblocked during routine service visits. The present invention provides a surprising practical solution which is not as expensive as a corresponding fully connected network apparatus, and which can progressively be configured to be adapted to provide protection paths and, in the meantime, provide a service which has a high probability of providing cross connections.

In addition to the automatic rerouting processes of the present invention the connection arrangement may be deblocked by manual jumpering (i.e. use of jumper cables to connect) of one or more inputs/outputs (N, M) to alternative (N, M) inputs/outputs.

Preferably, the network apparatus is arranged to bridge the connection between a subscriber terminal and a telecommunications service. Preferably, one or more of the first inputs/outputs (N) are arranged to provide connection to subscriber transmission lines. One or more of these subscriber transmission lines may be arranged to connect to a subscriber terminal such as a computer, a phone, a television or other electronic device. Preferably, on or more of the second inputs/outputs (M) are arranged to provide connection for service transmission lines. These service transmission lines may be arranged to provide broadband, POTS, ISDN, DSL (Digital Subscriber Line), ADSL, or other telecommunications services.

One, more or all of the first inputs/outputs could be at a subscriber end or service end of a telecommunications network. One, more or all of the second inputs/outputs could be at a subscriber end or service end of a telecommunications network.

In a specific embodiment, one, more or all the second input/output terminals are arranged to be connected to one or more DSLAM connection ports.

The cross-connect device may also comprise one or more other connection paths which are "hard-wired" or which provide permanent connection, and thus are not required to provide actuated connection. Furthermore, one or more of the connection paths may be arranged to be non-remotely actuated. One or more of the connection paths may be arranged to be both remotely and non-remotely actuated.

The device may be adapted to be used in a wired telecommunications system. The network apparatus may be adapted to be used in a wireless or optical telecommunications system. For example, one, more or all of the first and second inputs/outputs (N, M) may be adapted for conductive transmission path technology. One, more, or all first and second inputs/outputs (N, M) may be adapted for optical transmission path technology. One, more or all the connection paths may be conductive transmission paths. One, more or all connection paths may be optical transmission paths.

Preferably, the device is arranged to be used in an access network. Preferably, the device is arranged to be used in a transport network to enable connection to transmission equipment.

The device may comprise a linear and/or rotary motor drives to enable the automation of the cross connection arrangement, e.g. to switch the switching elements selectively.

The device may be a MDF. The device may also be a street cabinet. The device may be arranged to be part of the local exchange.

Preferably, each connection path is provided by a number of switching elements, the cross connection arrangement being adapted to provide between two and ten, more preferably four, switching options for each first input/output (N).

It has unexpectedly been found that acceptably low risk of blocking can be achieved with the relatively low numbers of connection options, i.e. three or more interlinked sparse cross-bars, according to the present invention, especially surprisingly with the preferred 2 to 10 (especially 4) switching connection options, and this leads to commercially significant advantages.

Preferably, the cross connection device is comprised in a switch card arranged to be connectable to one or more switch cards.

Preferably, the cross connection device is comprised in a switch card arranged to be connectable to one or more service transmission lines.

Preferably, the cross connection device is comprised in a switch card arranged to be connectable to one or more subscriber transmission lines.

In another aspect the present invention provides a method of adapting in situ a telecommunications network apparatus by adding additional stages of sparse cross-bars according to the present invention. Each of these sparse cross-bars comprise one or more self-contained cross connection arrangement modules, each of these modules providing less than 50% connectivity.

### Brief Description of Figures

Embodiments of the present invention will be described, by way of example, with reference to the following figures in which :
Figure 1 is a block diagram illustrating an arrangement for reconnecting conductors in an access network by remote control in accordance with known technology;
Figure 2 illustrates a basic architecture of a sparse crossbar in accordance with the present invention;
Figures 3a and 3b illustrate an arrangement according to the present invention using relay switches;
Figure 4 shows an arrangement according to the present invention, which can be viewed as a sub-equipped (non-full connectivity) crossbar switch (sparse crossbar);
Figure 5 shows an arrangement according to the present invention, which can be viewed as a sub-equipped (non-full connectivity) crossbar switch (sparse crossbar) to illustrate blocking.
Figure 6 shows a system architecture which can be used to implement the present invention;
Figure 7 shows a communications architecture which can be used to implement the present invention.
Figure 8 shows a non-blocking 4-stage cross-connect in accordance with an embodiment of the present invention.
Figure 9 shows a further non-blocking 4-stage cross-connect in accordance with an embodiment of the present invention.
Figure 10 shows that in a cross-connect according to Fig. 8 from an uneven fourth line there are connections paths to the first 16 of the second lines and from an even fourth line there are connection paths to the second 16 of the second lines.
Figure 11 shows a 3-stage cross-connect in accordance with an embodiment of the present invention.
Figures 12 and 13 show a re-routing method flow in accordance with an embodiment of the present invention.
Figure 14 shows an embodiment of a chain of arrangements of a cross-connect in accordance with the present invention.
Figures 15 and 16 show a cross-connect according to the present invention and a prior art device which are used for comparison purposes.

### Description of Preferred Embodiments

The present invention will be described with respect to particular embodiments and with reference to certain drawings but the invention is not limited thereto but only by the claims. Any reference signs in the claims shall not be construed as limiting the scope. The drawings described are only schematic and are nonlimiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

Although transmission lines are often formed from electrical conductors, the present invention is also applicable to systems incorporating wireless or optical transmission technology (e.g. radio frequency wireless or fibre optics). In such cases, the sparse crossbars include wireless or optical switches at crosspoints. However, for convenience, the foregoing description will primarily focus on conductor transmissions systems for illustration purposes only.

In the following reference will be made to stages of a cross-connect, each stage being a sparse crossbar. Although these are shown in drawings as separate crossbars, any topology which implements the present invention is included within the scope. Accordingly, the lines of the first and second stages, etc. can be interlaced or intercalated to form a single large switching matrix in which however, the individual sparse cross-bars can still be identified from the logic of operation.

In the following description reference will be made to "inputs" and "outputs". This is only for clarity purposes. Due to the fact that usually bidirectional transmission is possible an input can also be an output, i.e. it can be an input/output device or terminal. Wherever the word input is used it may be replaced with input/output (I/O) or I/O terminal.

The term "switch" or "switching element" should be construed broadly. The present invention is not considered to be restricted to or limited by any particular type of switch. For example, the present invention includes any type of device which is able to make and break a connection such as reed switches, relays, especially latching relays, and also simple conductive pegs which are located in holes by means of a robot device, optical switching devices, e.g. electrically operated mirror deflecting devices, or similar.

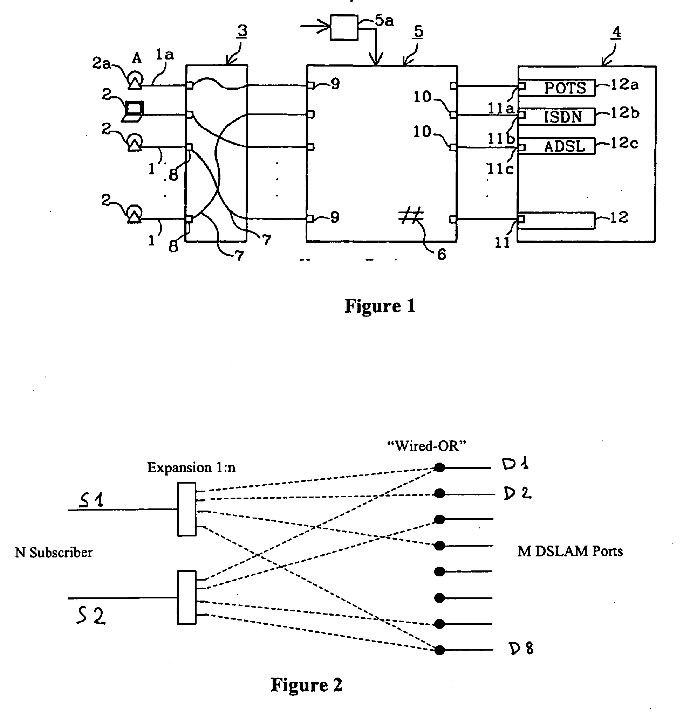

Figure 1 illustrates an arrangement for switching conductor connections in an access network by remote control with known technology. A number of twin-cables 1 are connected at one end to subscriber equipments 2 and at the other end to an MDF 3 belonging to a local exchange 4. Each copper twin cable 1 is connected via the MDF to an MXC (Metallic Cross Connect) 5, which is a cross connect that includes a large number of cross points 6 and an operating device 5a for setting cross points. The ports 8 to which the copper twin-cables are connected are connected to inputs 9 in the MXC by jumper cables 7 in the MDF. The MXC also includes outputs 10 to which inputs 11 for the local exchange 4 are connected. Several different types of communications services are associated with the input 11 in the local exchange. Figure 1 shows symbolically that an input 11a is associated with equipment 12a adapted for PSTN, that an input 11b is associated with equipment 12b adapted for ISDN, and that an input 11c is associated with equipment 12c adapted for ADSL.

The purpose of the MXC 5 is to enable the copper twin cables 1 to be reconnected to the inputs 11 by remote control. For instance, assume that a subscriber A having equipment 2a is originally a PSTN subscriber. A copper twin cable 1a is connected at one end to the subscriber equipment 2a and at the other end to the input 11a of the local exchange4, via the MDF 3 and the MXC 5. Also assume that the subscriber A changes the type of subscription by purchasing an ISDN service. The subscriber equipment 2a must then be connected to equipment in the local exchange 4 that is adapted for ISDN. Reconnection of the cable 1a to the input 11b can be effected by remote control in the MXC 5, by resetting a number of cross points with the aid of the operating device.

Embodiments of the present invention provide a modified and improved cross connection compared to the prior art. Any of the cross connection arrangements described with respect to the present invention can be used in the MXC 5, the local exchange 4, the MDF 3, or street cabinets (not shown).

Figure 2 shows two subscriber lines (S1, S2) on the left hand side for connection with eight DSLAM port lines (D1-D8) on the right hand side. There are a corresponding number of inputs (N=2, M=8) for cross connection of each of the subscriber lines and DSLAM port lines. Typically however, there would be many more subscriber lines and DSLAM port lines. For example, in a typical street cabinet, there may be 300 subscriber lines and 120 DSLAM port lines. In a typical switch card there may be 50 subscriber lines and 24 service port lines. Due to the fact that not every subscriber may want an xDSL connection, there is an optimum number of subscriber lines that is in excess of the service port lines.

Figure 2 shows a cross connection arrangement in which each subscriber line has four different connection paths (S1-D1, S1-D2... S1-D8, S2-D1 S2-D3 .....S2-D8) to connect with four of the eight DSLAM port lines. Some of the DSLAM port lines are connected to only one of the two shown subscriber lines e.g. D2, D3, D4. Other DSLAM port lines are connected to both of the two subscriber lines D1, D8. The arrangement provides a 4x expansion for each subscriber line.

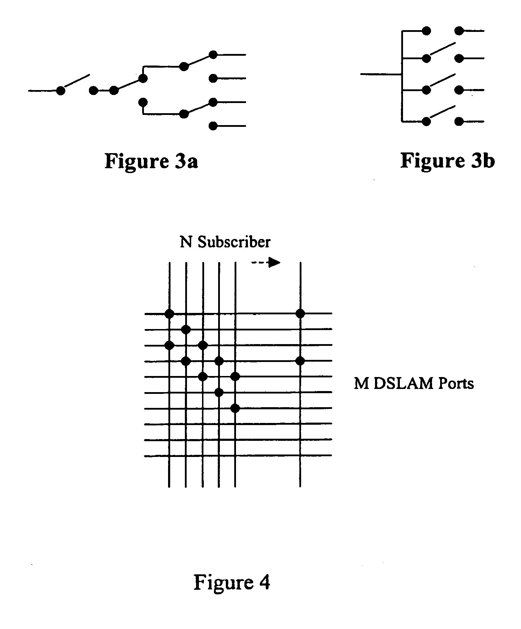

Figures 3a and 3b show two alternative possible implementations of the present invention using relay contact switches which can be used at the crosspoints of the embodiments of the present invention. However, other types of switches could be used in any embodiment, e.g. electromechanical or semiconductor switches. Latching relays are preferably used in order to preserve the switching state when power is removed. Switching of the relays will be under the control of a controller, e.g. microcontroller which may be onboard or remote. In order to save power, relay operations will be done sequentially, i.e. power will only ever be applied to one relay at a time. Switching an individual relay takes of the order of 5ms, so an entire relay of 100 relays can be refreshed in less than 1s.

Figures 3a and 3b show two possible arrangements for an expansion of four for a single subscriber line with four DSLAM lines.

Figure 4 shows an alternative illustration used to explain an expansion factor of two. Each subscriber line can be connected to two of the DSLAM lines, i.e. there is an expansion factor of 2. This figure shows certain principles of a sparse crossbar. The number of subscriber lines is large - at least as large as the number of DSLAM lines and usually considerably larger. To reduce the number of switches not every subscriber line can be connected to every DSLAM line - in Fig. 4 there are only two switches per DSLAM line, i.e. there are two possibilities for connection of each subscriber line to DSLAM lines. This reduces the number of switches but has the disadvantage that, if for a particular subscriber line the corresponding two DSLAM lines have been already used for other subscribers, then there is no possibility of connecting the particular subscriber. The cross-connect is then blocked. How to prevent blocking will be described below.

Taking the aforementioned typical switch card example, conventional arrangements would have 50x24 (i.e. 1200) cross connection points. With an expansion factor of 4, i.e. four switches to DSLAM lines, the present invention would have 200 cross points. With the aforementioned typical street cabinet arrangement, there would be 300x120 (i.e. 36000) cross points. Again, with an expansion factor of 4, the present invention would have 1200 cross points. In an arbitrary example, if you consider a 10X10 matrix, the prior art would provide 100 cross points. With an expansions factor of 2, the present invention has 20 cross points.

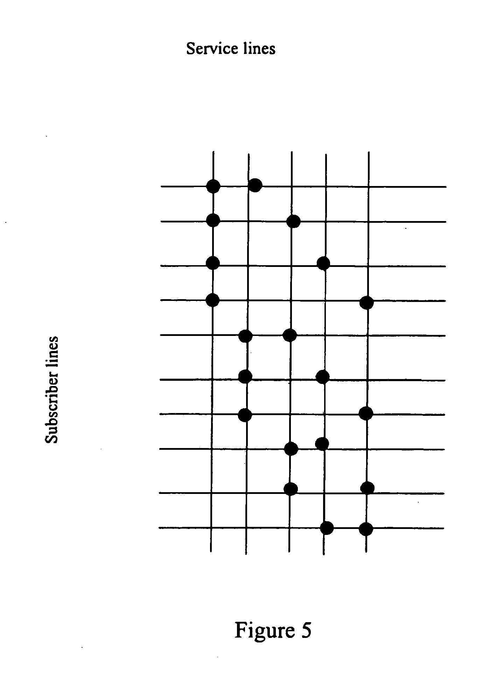

A similar illustration to Figure 4 is shown in Figure 5, also with an expansion factor of two. In this example however, there are ten subscriber lines and five service ports.

Two types of blocking can occur - blocking of the switch fabric itself, and blocking due to all service ports being used.

The Switch Fabric is blocked when after a certain number of lines have been switched through, there are no more possibilities to reach an output line even though some of these are free.
- A first type of deblocking includes automatic rearrangement. This form of deblocking can be performed by a re-routing or deblocking algorithm in accordance with the present invention.
- A second type of deblocking involves manually patching a subscriber to another subscriber input of the switching matrix. This requires a visit and the present invention has an object to reduce such visits.
- A third type of blocking requires a new card: Install an expansion card giving each subscriber line more connection options, increasing "M". Again this requires a manual intervention. The present invention has as an object to delay this moment as long as possible.

In the case of Service Port Blocking all service ports are used, and no further service can be granted. The only de-blocking option here is to install more service ports, together with another matrix to connect the subscribers to them. The present invention has as an object to delay this moment as long as possible.

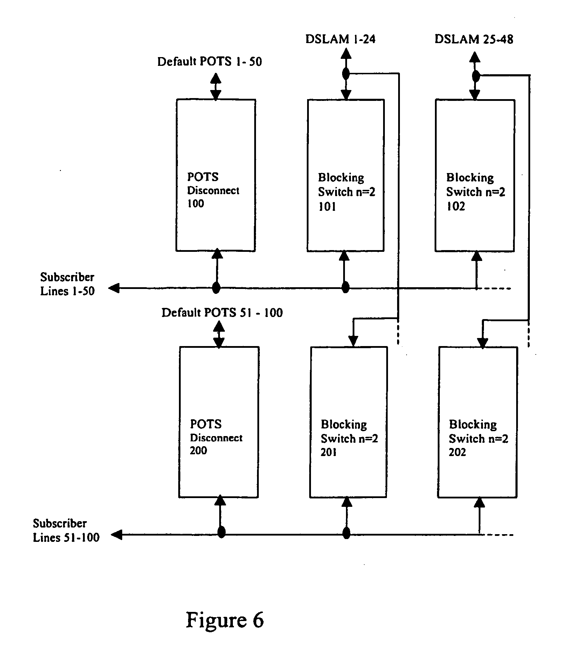

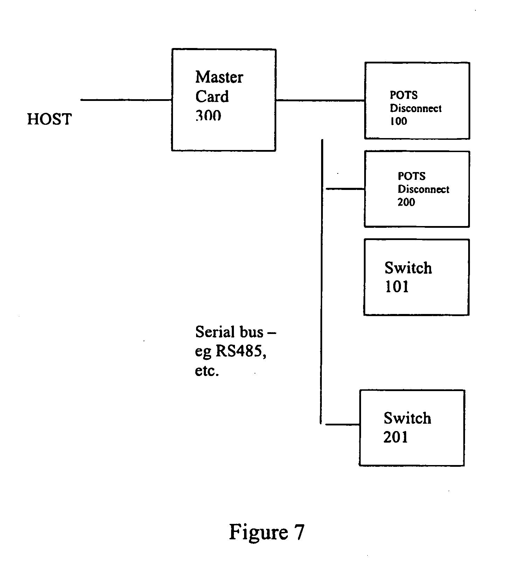

Figures 6 and 7 shows examples of systems and communications architectures which can be used to implement the present invention. Figure 6 shows a switch matrix of two rows of switch modules 100-102, 200-202. The dashed lines indicate that the matrix can be expanded in the horizontal and/or vertical direction.

Fifty subscriber lines are each connected to POTS disconnect switches 100, 200. These switches 100, 200 are provided to allow each subscriber to be connected to its respective default POTS port. A relay contact (not shown) on the switches 100, 200 for each subscriber line is provided to connect each line through to its default POTS connection.

Each switch 100, 200 is respectively connected to corresponding cross connection switch cards 101, 102, 201, 202. Switch cards 101, 102 provide connection for subscriber lines 1-50 and switch cards 201, 202 provide connection for subscriber lines 51-100. Cross connection switch cards 101, 201, and 102, 202 are respectively connected to DSLAM transmission lines 1-24 and 25-48.

Each cross connection switch card 101, 102, 201, 202 has the same expansion of 2 (i.e. provides two connection options). However, in other embodiments, they could have differing connection options.

If the switching matrix is required to handle more and more subscribers then more switches can be added in the vertical direction. If more DSLAM ports (or ports carrying another service) are required, then more cross connection switches can be added horizontally. As more and more cards are added, the overall size of the switch is increasing, rather than adding smaller switches. The possible connections for each subscriber line are spread across all the available DSLAM ports.

So consider an apparatus which initially only comprised switches 100 and 101. Fifty subscribers would be connected to twenty-four DSLAM ports. On the addition of switch 102, fifty subscribers could be connected to forty-eight DSLAM ports. On the addition of the bottom row, one hundred subscribers could be connected to forty-eight DSLAM ports.

It is possible to add further switch cards in parallel to increase the expansion. For example, an additional n=2 switch card can be added in parallel to an existing n=2 switch card. In other words, this additional switch card would be between the same POTS disconnect switch (i.e. subscriber lines) and the same DSLAM ports of the existing switch card. This additional switch card would be arranged to provide different connection options between the subscriber lines and the DSLAM ports to the existing switch card. This could involve adapting the connection paths in the existing switch card. In this way, the expansion would be increased to 4. This method could be used to add a different expansion to an existing expansion. (e.g. n=3 to n=2). Alternatively, the expansion provided by a switch card could be increased by providing a replacement switch card with a higher expansion (i.e. replacing an n=2 with an n=4).

Figure 7 shows a proposed communications architecture in which the switch cards are connected together by means of a serial bus (e.g. RS485), under the control of a master controller card 300. This master control card 300 controls the configuration of each of the switches, and the switch cards determine their address, and hence their position in the matrix, from pins on the backplane connector (provides connectivity between individual elements of the system) into which they are plugged.

The present invention also provides apparatus and methods for non-blocking cross-connects of the type described above, i.e. a cross-connect with means of connecting one of a plurality of inputs to a non-busy one of a plurality of outputs.
These embodiments can include:
i. The description of an R-stage irregular concentration switching matrix and method of operating the same, where R is an integer and is at least 3, and/or
ii. Means and methods to control such a switching matrix, leading to a good non-blocking performance.

These embodiments of the present invention include the operation of a rearrangeable, non-blocking cross-connect or concentrator. A switching matrix is said to be rearrangeable and non-blocking if the following is satisfied. Suppose connection requests arrive serially. Whenever a connection request arrives, the matrix is in a state where certain inputs are connected to certain outputs through the matrix. In the following a non-busy input or output is called an idle input or output. A switching matrix is defined as rearrangeable and non-blocking if every connection request can be satisfied, eventually by rescheduling the existing connections up to the point when a certain number of outputs are used. Ideally the switching matrix should only block when the number of outputs used is 100%. Such a cross-connect is known as a "wide sense non-blocking" device. However, in accordance with the present invention blocking at less than 100% is also an acceptable solution. For example, if for a cross-connect according to the present invention a random selection of any of 80% of the output ports can be assigned to an input port without blocking there is a considerable improvement over the crossbar of US 4,750,202 which blocked after 9 from 25 service ports were allocated, i.e. after only 36% utilisation.

With a sparse crossbar, a connection between an input and an output need not be possible, despite the fact that neither of them is already connected. This situation occurs when the existing connections block all the possible routes between a specific input and an arbitrary output. In the context of a concentrator, rearranging the existing connections means finding a possible route between the requested set of inputs and an arbitrary set of outputs by altering the switch elements used in the sparse crossbar, so that every input is connected to a distinct output. After a rearrangement the set of inputs will be connected to another arbitrary set of outputs. The switching matrix can be operated in a make-before-break strategy. In other words, whenever a line should be rescheduled, a path between the input in question and an idle output can be made, before the original connection can be broken.

A cross-connect arrangement or a concentrator connects specific, idle inputs/outputs to arbitrary, idle inputs/outputs. Obviously, concentrators where one number of inputs/outputs N is greater than the other number of inputs/outputs M are mainly of interest. In the present invention the topology of the switching matrix is irregular. A switching matrix is said to be irregular if input-output connections can have different delays, where delay is defined as the number of switching elements through which the signal must pass. By using an irregular switch topology, the total number of cross points, i.e. switches, is reduced. By applying an intelligent routing algorithm and an R-stage switching matrix, the non-blocking property is obtained.

Topology of a switching matrix in accordance with embodiments of the present invention

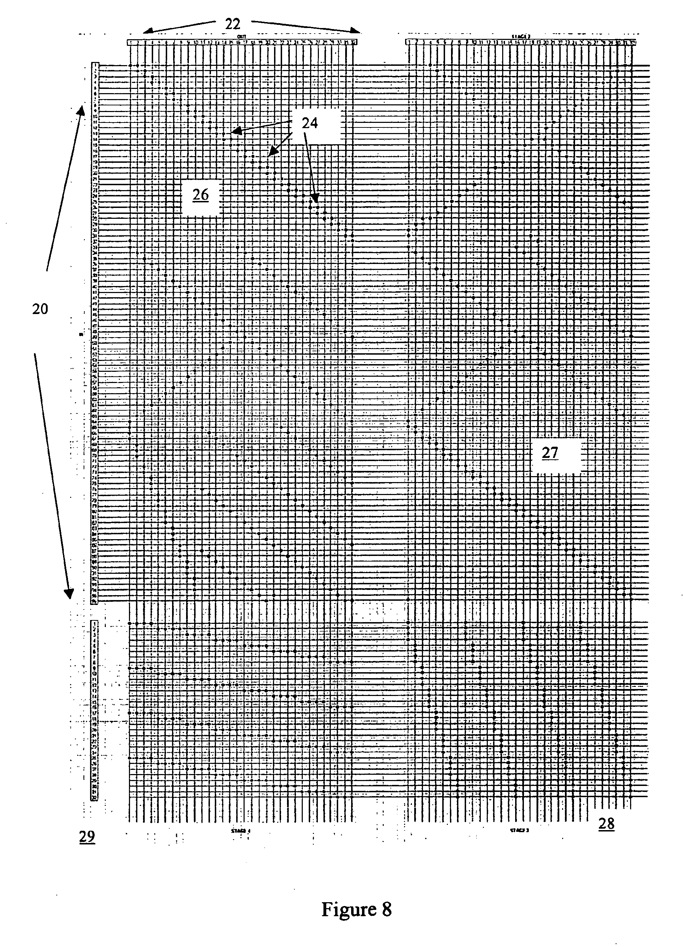

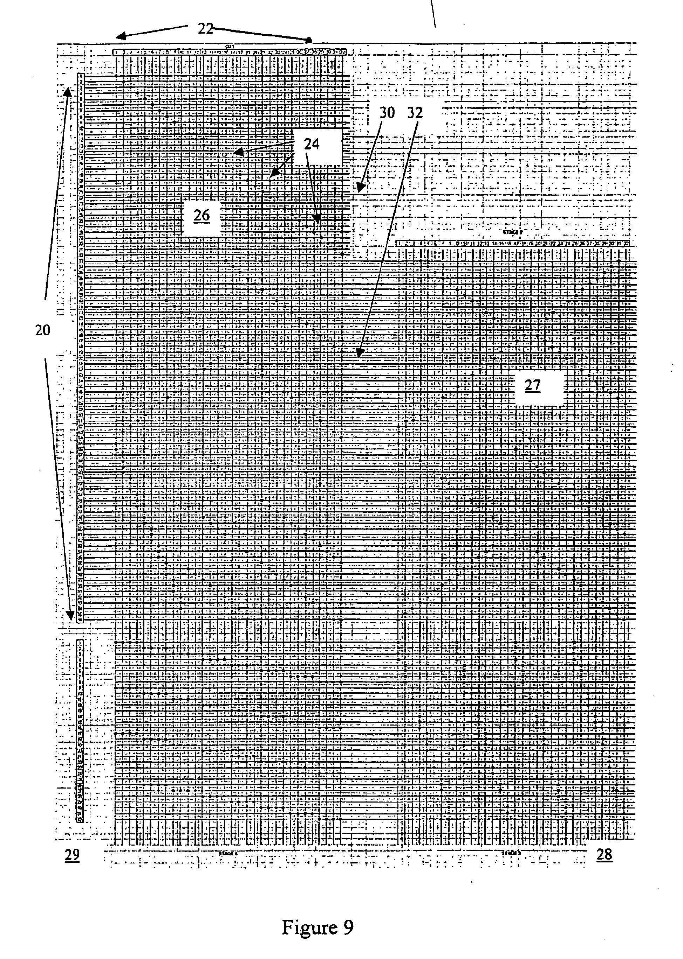

The present invention concerns an irregular R-stage switching matrix with R equal to or greater than 3 and will be described for example only with respect to 3 and 4 stage switching matrices. The cross-connect arrangements according to the present invention having N first inputs/outputs that are to be connected to any of M second input/outputs, and the total number of switches is less than N x M. Fig. 8 shows a 4-stage switching matrix in accordance with an embodiment of the present invention with stages 26-29. The matrix comprises on the left hand side of the figure N horizontal conductive lines terminated by first inputs/outputs and M vertical conductive lines terminated by second inputs/outputs. Reference to horizontal and vertical lines applies only to the figure - it is not intended that the words horizontal or vertical refer to the physical arrangement of the lines. At a certain number of the crosspoints of the horizontal and vertical lines switching elements are provided in accordance with a particular scheme. The subscriber inputs 20 are shown on the left and the service outputs 22 (e.g. xDSL) are shown on the left at the top. The crosspoints 24 of the first stage 26 are switching elements through which the outputs are directly reachable from the inputs. In an embodiment of the present invention all inputs 20 of the first stage 26 have at least the same number "a" of crosspoints or switches 24. Some of the lines in Fig. 8 have 2 switches. Other lines have 3, e.g. input lines 65-96. The present invention is not limited to a constant number of switches per line and can be extended to a variable number of switches at crosspoints. The present invention also includes a first block of inputs 20 connected by horizontal lines to a first number of switches at crosspoints, e.g. 1 switch at a crosspoint per input and a second block has a second number of switches at crosspoints, e.g. more than 1 switch at a crosspoint per input as shown schematically in Fig. 9. The ordering of the crosspoints in the second block of the first stage is not at random, but avoids repeating combinations in order to increase the connectivity of the switching matrix.

In this embodiment a topology is shown having a first stage comprising a first block 30 with 1 switch at a crosspoint per input 20 and second block 32 with 2 switches at crosspoints per input 20 as shown in Fig. 9. Furthermore, inputs 20 belonging to the first block 30 are said to be class 1 inputs; inputs belonging to the second block 32 are said to be class 2 inputs. The 2^{nd}, 3^{rd} and 4^{th} stages 27-29 of the switching matrix are a means of connecting an arbitrary input of the first stage 26 to one of a part of the set of outputs 22 or the entire set of outputs 22.

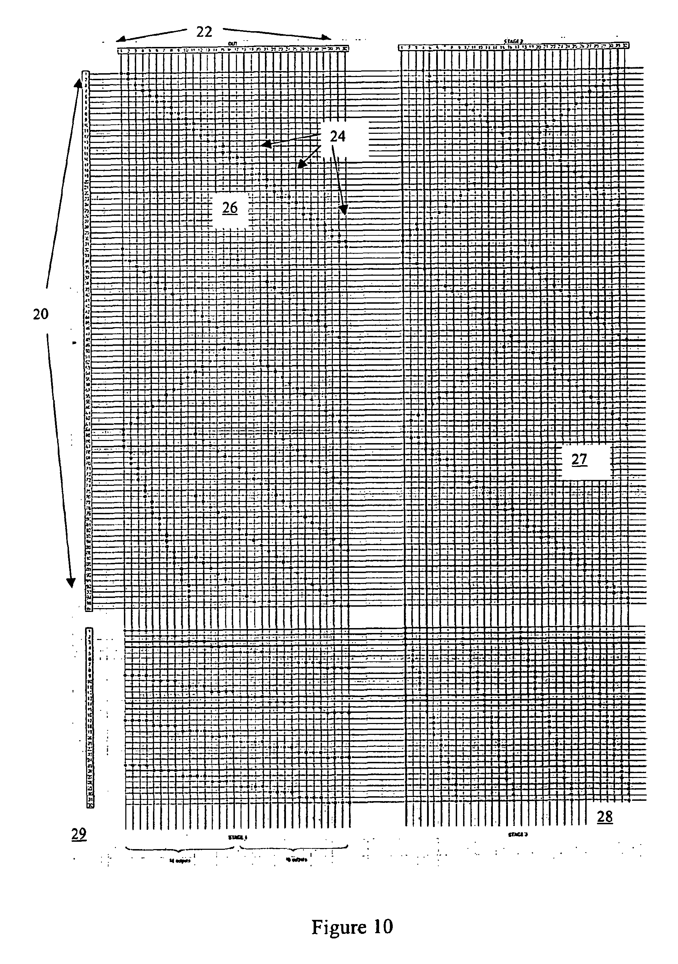

In an embodiment of the present invention the second stage 27 has always one or more switches at crosspoints 25 on a first set of lines, e.g. the odd lines, and one or more switches at a crosspoints on a second set of lines, e.g. even lines, whereby the first and second set do not overlap. By making use of a line from the first set in the second stage 27, a first set, e.g. the first half of the outputs 22 is reachable through the third and fourth stages 28 and 29. Making use of a line from the second set in the second stage 27, a second set, e.g. the second half, of the outputs 22 is reachable through the third and fourth stages 28 and 29 (see Fig. 10). The first and second sets of outputs 22 preferably do not overlap. As a result, if the second to fourth additional stages 27-29 are idle, every input of the second stage 27 can reach every output 22 through the third and fourth stages 28 and 29. This property involves a hardware redundancy and is important regarding the non-blocking property of the overall switching matrix.

### Routing general considerations

In the embodiments of the present invention shown in Figs. 8 to 10, the outputs 22 are reachable through the first stage 26 directly for some of the inputs 20 and also outputs 22 are reachable from the fourth stage 29 via the second and third stages 27, 28. Through the switching elements 24 of the first stage 26 and the fourth stage 29 the inputs 20 have access to the outputs 22. If a connection request arrives for a specified input 20, a controlling means which may be located anywhere, e.g. with the cross-connect or somewhere else in the telecommunications network, i.e. remote controlling means, first checks the possibility to route the specified input 20 to an output 22 directly through the first stage 26. If there is no possibility to make a direct connection through the first stage 26, then the controlling means tries first of all to find a way through the second to fourth stages 27-29 to reach an idle output 22. If this is not possible, the controlling means can attempt a rearrangement of the matrix, i.e. try to reroute the connection paths by altering the switches along those paths.

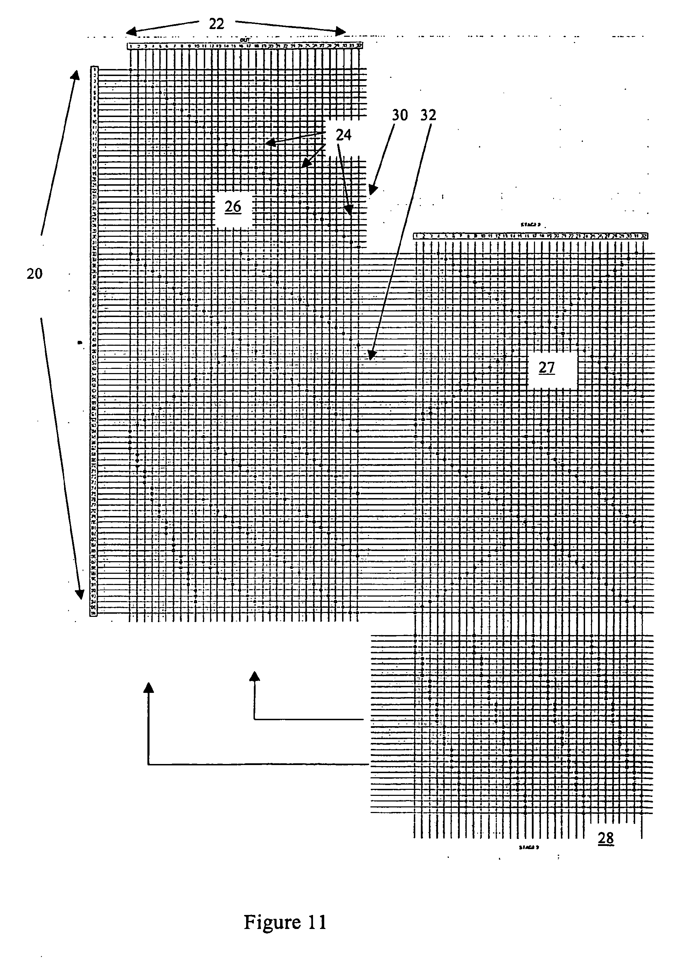

In Fig. 11 another embodiment of the present invention is shown. In this case only three stages 26 to 28 are used. At the third stage 28 outputs are connected to selected lines of the first stage 26, i.e. are chosen to select a line different from the lines that this input 20 in the first stage 26 could reach. Other details remain the same. This embodiment has the disadvantage of not having the additional lines made available by the fourth stage 29 in the previous embodiments but may use less switches.

### Routing control algorithm

A routing policy in accordance with an embodiment of the present invention will be described with reference to the embodiments described with reference to figures 8 to 11. However the present invention is not limited to four stage switching matrices and can be applied to any R-stage matrices where R is equal to or greater than 3.

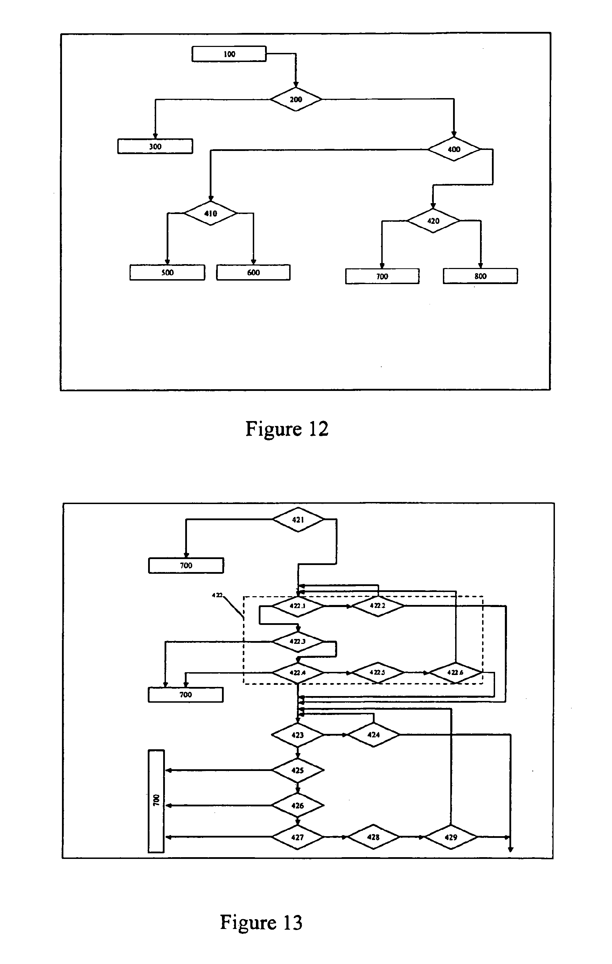

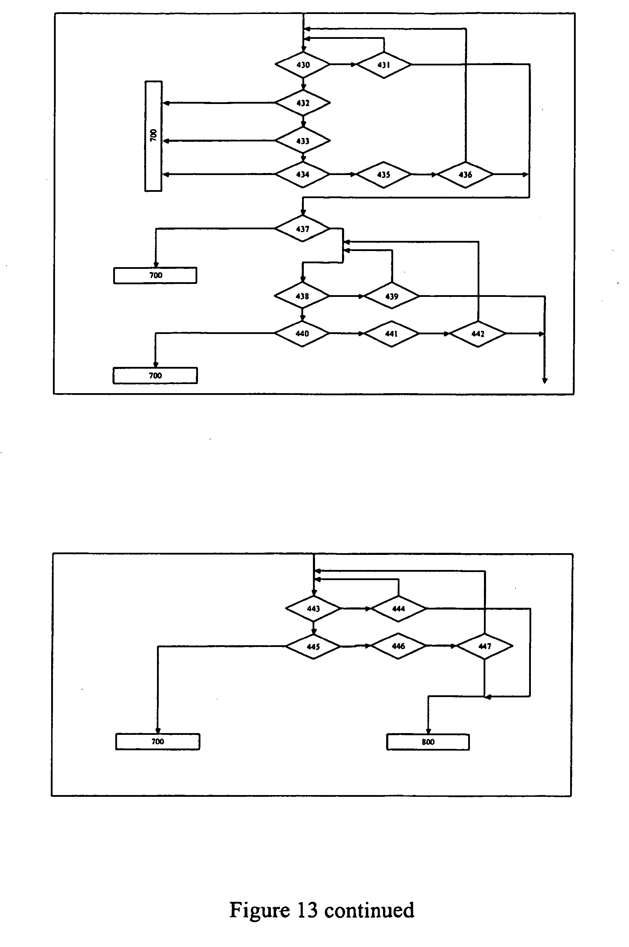

A routing policy is illustrated in Fig. 12 and Fig. 13 and is based on the following data structures. For every stage 26-29 an input matrix configuration as well as an output matrix configuration is stored. The input matrix configuration contains the following information:
■ A dynamic part: for every input-line of the considered stage the data structure includes a parameter indicating the state of the specified input (idle or busy).
■ A static part: for every input-line of the considered stage the data structure comprises the position of the different switching elements.

The output matrix contains for every output the following information:
■ A parameter indicating the state of the considered output (idle or busy)
■ If the considered output is busy, the output matrix contains a pointer to the input line to which the considered busy output is connected.

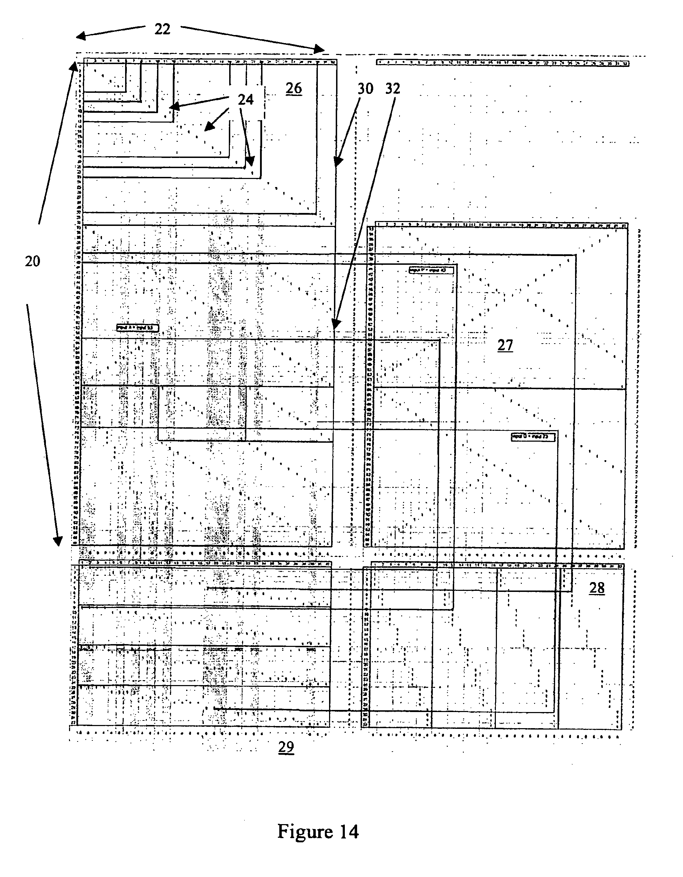

The controlling means can be implemented by software running on a suitable computing device, e.g. a personal computer or a workstation. The software is provided with code for detecting connection requests. Furthermore the software runs initially on an internal database. When a solution is found, the physical connection is performed. This approach makes a make-before-break strategy possible. This means that whenever a rearrangement of an existing connection should be performed, first a parallel connection is made before breaking the original one. In the following, an input for which the connection request arrives, is designated as input A. When a connection request arrives (Fig. 12, state 100), the controlling means starts the search for an output to which the specific input can be connected. The routing policy comprises the following steps:
■ In step 200 the controlling means considers the possibility to connect the input directly to an idle output through the first stage 26. In order to do so, the controlling means checks the positions of the switching elements 24 in the first stage 26 for input A. If the output corresponding to one of those positions is idle, input A can be connected to this output.
■ If YES in step 200, the connection through the first stage 26 will be executed (state 300). In this state the dynamic part of input matrix of the first stage26 as well as the first stage output matrix are updated.
■ If step 200 does not find an idle output, the algorithm proceeds to step 400. Step 400 controls if the input is a class 1 input. If YES in step 400, step 410 is performed which rearranges an existing connection. Step 410 will be discussed later. If NO in step 400, step 420 is performed.
■ Step 420 occurs when a direct routing of an input of class 2 is not possible. An important feature of the present invention is the development of an intelligent routing algorithm, leading to the rearrangeable non-blocking property. Step 420 comprises a number of refinements (Fig. 13), used when a direct connection through the first stage 26 is not possible. The different refinements are ordered by increasing complexity.
■ Step 421 controls if there is a connection path through the second, third and fourth stages 26 to 29 leading to an idle output 24. Starting from a specific input of class 2, every possible connection path through the additional stages 26 to 29 is tested on its output (busy or idle). If a connection path can be found, the connection is made and the corresponding input and output matrices are updated (step 700). If no idle output 24 can be reached through the second to fourth stages, the controlling means proceeds to step 422.
■ Step 422 executes a rearrangement and comprises steps 422.1, 422.2, 422.3, 422.4, 422.5 and 422.6. In the following the rearrangement of step 422 will be called a backward rearrangement. In step 422.1 an idle output is selected. Then the controlling means tests the possibility to connect a busy input, connected through the additional stages 27-29, to the selected idle output.
■ If NO in step 422.1, step 422.2 controls the presence of another idle output. If YES in step 422.2, step 422.1 is performed for the next idle output. If NO in step 422.2, the controlling means proceeds to step 423.
■ If YES in step 422.1, the selected busy connection is disconnected, the data structures are updated and step 422.3 is executed. After the backward rearrangement stages 2, 3 and 4 are in another state. In step 422.3 the controlling means tests if there exists a possible way to connect input A to an idle output through stage 1 . If YES in step 422.3, the data structures are updated and the connection is made (step 700). If NO in step 422.3, the controlling means proceeds to step 422.4. In step 422.4 the controlling means tests the possibility to connect input A to an idle output through stages 27-29. If NO in step 422.4, the original state of stages 2, 3 and 4 is restored (step 422.5) and step 422.6 tests the presence of other idle outputs. If YES in step 422.6, the controlling means loops to step 422.1 and tests the possibility to do a rearrangement. If NO in step 422.6, the controlling means proceeds to step 423. This means all idle outputs have been tested in step 422.1. If YES in step 422.4, the corresponding data structures are updated and the connection is made (state 700). At this point the control algorithm ends.
■ Arriving in step 423 means that there is no direct connection path through the first stage 26 towards an idle output, nor through the additional stages 27-29, nor exists the possibility to do a backward rearrangement and make a connection. Step 423 aims at changing the initial state of the switching matrix by changing the connection path of an existing connection, connected directly through the first stage 26. Step 423 selects a busy input of class 2, connected to an output through the first stage 26, and tests if the busy input can be reconnected to an idle output, again however through the first stage 26. In the following step 423 will be called a "first stage rearrangement". If NO in step 423, step 424 tests the presence of another busy input of class 2. If YES in step 424 the next busy input of class 2 is selected and step 423 is repeated. If NO in step 424, the controlling means proceeds to step 430. If YES in step 423, the corresponding data structure is updated and the controlling means proceeds to step 425.
■ Step 425 tests the possibility to connect input A directly through the first stage 26. Since the state of the first stage 26 has been changed, this may be possible. If YES in step 425, the controlling means proceeds to step 700
where the data structure is updated and the connection is made. If NO in step 425, the controlling means proceeds to step 426.
■ Step 426 tests the possibility to connect an input A to an idle output through stages 27-29 in the new state of the switching matrix.. If YES in step 426, the controlling means proceeds to step 700 where the data structure is updated and the connection is made. If NO in step 426, the controlling means proceeds to step 427.
■ Step 427 has the same functionality as step 422: see description of step 422. If YES in step 427 the controlling means proceeds to step 700 where the connection is made and the data structure is updated. If NO in step 427, step 428 restores the state before step 423 and step 429 tests the presence of other busy inputs directly scheduled through the first stage. If YES in step 429, the controlling means loops to step 423. If NO in step 429, the controlling means tested all possible ways to do a first stage rearrangement. At this point no solution has been found and the controlling means proceeds to step 430.
■ In the former step, the controlling means tested the possibility to rearrange the first stage by selecting a busy input connected directly through the first stage. As for step 423, the goal of step 430 is to change the initial state of the switching matrix by changing the connection path of an existing connection, directly connected through the first stage. Step 430 selects a busy input connected to an output directly through the first stage and tests the possibility to reconnect the selected busy input through stages 27 -29. In the following we call step 430 a "first stage-to-second stage rearrangement". If NO in step 430, step 431 tests the presence of another busy input and the same procedure (step 430) is repeated. If YES in step 430 the corresponding data structures are updated and the state of the switching matrix is changed. The controlling means proceeds to step 432 which tests the possibility to connect input A directly through the first stage 26. If YES in 432 the controlling means proceeds to step 700 where the connection is made and the data structures are updated. If NO in step 432 the control means proceeds to step 433 which tests the possibility to reach an idle output through the additional stages 27-29. If YES in 433 the controlling means proceeds to step 700 where the connection is made and the data structures are updated. If NO in step 433 the algorithm proceeds to step 434 which has the same functionality as step 422. It concerns a backward rearrangement: see description above relating to step422. If YES in step 434, the connection is made and the corresponding data structures are updated. If NO in step 434, step 435 restores the state before step 430 after which step 436 checks the presence of another busy input. If YES in step 436, the controlling means loops to step 430. If finally all busy inputs of class 2 are tested and no solution has been found, the controlling means proceeds to step 437.
■ Up to this point the controlling means tested the possibility to reach an idle output by changing the state of the first stage 26, by changing the state of the stages 27-29 or by a combined change of the first and the rest of the stages 26-29. The transformation of the state involved however not more than the connection path of one busy input. Step 437 tests the possibility to perform a chain of rearrangements in the stages 27-29 and to connect finally input A with an idle output. This is useful for example in the following situation (see Fig. 14). Input A cannot reach an idle output through the first stage 26 and in the second stage 27 the outputs corresponding with the two switching elements are busy. The input which uses the first of those busy outputs will be called input P. Input P can not be rearranged, because the controlling means already tested this possibility (step 422). If the second switch element of input P is also busy, we call the input that occupies the corresponding output Q. These method steps are repeated until the controlling means finds an input with a second idle switch element. This final input is the final element of a chain. The controller tests the possibility to route this final input through the stages 27-29 using the idle switch element. If YES, then all the other connections of the chain can be rearranged too, starting with the penultimate element of the chain. In the following we will call a rearrangement of this type a chain of forward rearrangement, in which 'forward' indicates that the rearrangement procedure does not start at an idle output at the output side. Finally input A can be connected through the stages 27-29 using the switch element that was originally busy. If however the ultimate element of the chain cannot reach an idle output through the idle switch element, the same procedure can be repeated for the second switch element of input A. If a solution is found, the controlling means proceeds to step 700: the corresponding data structures are updated and the connections are made. If no success is reached the controlling means proceeds to step 438.
■ If the chain of forward rearrangements of step 437 did not have any success, the controlling means performs step 438 which has the same functionality as the first stage rearrangement of step 423 (description see above), followed by a chain of forward rearrangements. Step 438 tests the possibility to rearrange the first stage 26. If NO in step 438, step 439 tests the presence of another busy input. If YES in step 439, the controller loops to step 438. If NO in step 439, the algorithm proceeds to step 443. If YES in 438, step 440 is performed. Step 440 has the same functionality as step 437: it tries to perform a chain of forward rearrangements. IF YES in step 440, the corresponding data structures are updated and the connection is made. If NO in step 440, the state of the switching matrix before step 438 is restored in step 441. Step 442 tests the presence of other busy inputs. If YES in step 442, the controlling means loops to step 438. If NO in step 442, the controlling means proceeds to step 443.
■ Step 443 has the same functionality as the first stage-to-second stage rearrangement of step 430 (description see above). If NO in step 443, step 444 tests the presence of another busy input. If YES in step 444, the controller loops to step 443. If NO in step 444 the controlling means proceeds to step 800 which means input A is blocked. If YES in step 443, step 445 is performed. Step 445 has the same functionality of step 437 (description see above) and tries to execute a chain of forward rearrangements. If YES in step 445, the controller proceeds to step 700
where the corresponding data structures are updated and the connection is made. If NO in step 445, step 446 cancels the first stage-to-second stage rearrangement performed in step 443 and step 447 tests the presence of another busy input. If YES in step 447, the controller loops to step 443. If all busy inputs are tested, the controlling means proceeds to state 800. In state 800 the input A is declared blocked.
■ Step 410 will now be considered. In this situation a class 1 input is blocked. The busy input B which blocks input A has to be reconnected to another idle output. Output C, the only output to which input A can be connected, is presently connected to input B. The connection path of input B is removed from the data structure. At this point a connection path will be searched for input B using steps 200 and 420. If NO, input A is declared blocked and the state of input B before step 410 is restored. If YES the data structure is updated and the connection of input A and B is performed.

### Comparison test

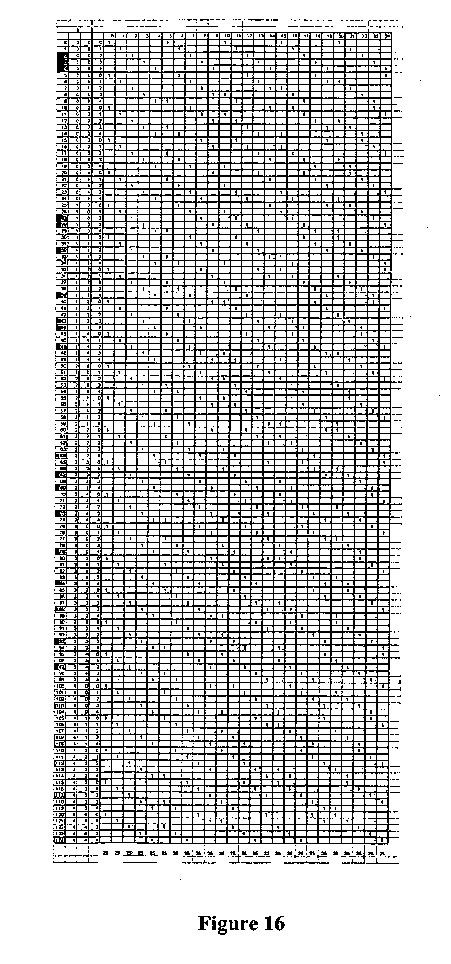

Taking a specific prior art example as outlined in US 4,750,202 (or EP 0 257 290 B1) for illustration purposes, the topology is depicted in Fig. 16. The position of the crosspoints is determined by the following formula rx² + sx + t = y, where (r,s,t) is an input described in a 5-base system and (x,y) is an output in a 5-base system. By consequence this concentrator has q³ inputs and q² outputs, or 125 inputs and 25 outputs. For this system a worst-case scenario is depicted in Fig. 16. A set of inputs is selected which cannot be connected to the indicated outputs. In the considered example a set of 25 inputs is selected none of which can be connected to 7 of the 25 outputs. If a connection request arrives for this set of inputs, independent of the order, at least 7 inputs will be blocked for this concentrator, no matter how intelligent the control algorithm. Another property is that the blocking can possibly occur before a reasonable number of connection requests has been made, e.g. before the 19^{th} connection request. The appearance of blocking in a little employed switching matrix is unacceptable. In the following simulation results will be discussed, proving the quasi-non-blocking property of the current invention.

### Simulation results

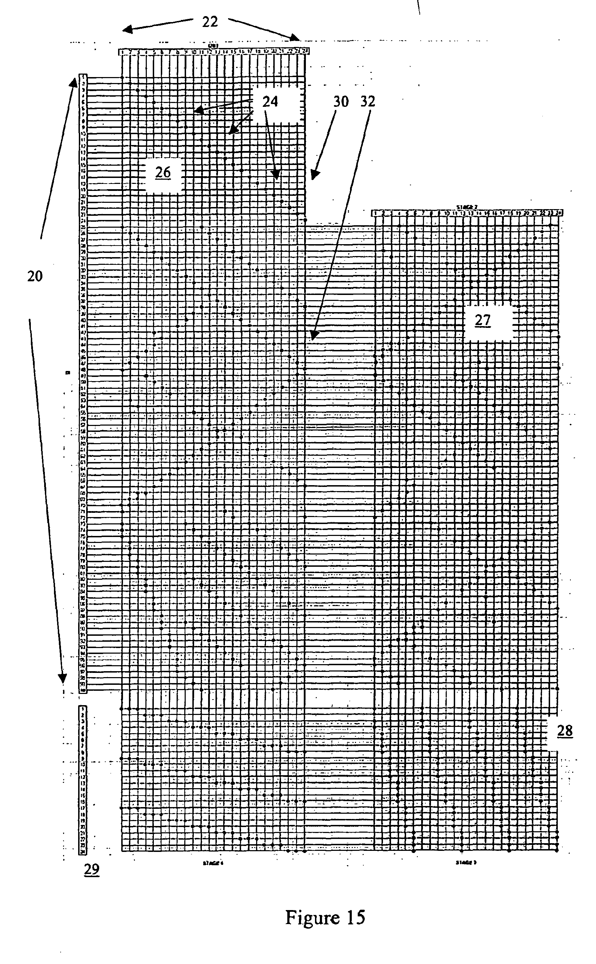

In order to validate the contentions, a simulator of the current invention has been built. For illustration purposes a concentrator with 100 inputs and 24 outputs was considered as shown in Fig. 15. For this specific design 1 000 000 simulations have been performed. An overview is given in Table 1 and Table 2.

**Table 1: performance concentrator**

| | Total | Percentage |
|---|---|---|
| Number of concentrators | 1 000 000 | |
| Concentrators with success | 998 650 | 99,87 |
| Concentrators with blocking | 1350 | 0,13 |
| Connection requests | 24 000 000 | |
| Connection requests with success | 23 998 647 | 99,994 |
| Connection requests blocked | 1353 | 0,006 |

**Table 2: first blocking**

| | Total | Percentage |
|---|---|---|
| Concentrators with blocking | 1350 | 0,135 |
| 24^{th} request blocked | 1320 | 0,132 |
| 23^{rd} request blocked | 24 | 0,0024 |
| 22^{nd} request blocked | 5 | 0,0005 |
| 21^{st} request blocked | 1 | 0,0001 |

For this specific design it appears from Table 1 that 99,994% of the connection requests can be fulfilled. When blocking occurs, the blocked connection is in 97,78% (1320/1350) the final connection request. Furthermore maximum 2 lines were blocked, however only in 0.0002% of all cabinets. Also it can be guaranteed that there is no blocking up to 20 requests. This compares very favourably with the blocking after the 9^{th} request in the prior art system.

The present invention also includes a telecommunications network apparatus as hereinbefore described with reference to Figures 2 to 15 or a telecommunications network system as hereinbefore described with reference to Figures 2 to 15. The present invention also includes a method of adapting an in situ telecommunications network apparatus as hereinbefore described with reference to Figures 2 to 15.

It will be appreciated by the person skilled in the art that various modifications can be made without departing from the scope of the invention. For example, the expansion could be applied to the DSLAM (service ports) ends so that every DSLAM port is connected to an array of relays, the output of which are each connected to several subscriber lines. The electrical performance of the switching matrix apparatus is enhanced if the switch structure is 'reversed' so that each DSLAM port is connected to several subscriber lines, rather than vice versa. There are usually less DSLAM ports than subscriber lines, and it is a preferred if there are less un-terminated lines (stubs) hanging off each DSLAM or subscriber line. Stubs cause a degradation in frequency performance of the circuit and, in fact, the number and characteristics of the stubs attached to a particular live circuit varies as other subscribers are connected or disconnected, and this change in electrical characteristic can be enough for the line to drop out of service. Accordingly, a design that reduces the number or size of stubs is a significant benefit.

The second to at least third stages of the cross-connect device according to the present invention as well as the controller may be supplied as separate modules which may be used to upgrade an existing installation.

## Claims

1. A cross-connect device having a plurality of N first transmission path input/output terminals (20) and a plurality of M second transmission path input/output terminals (22), the device having a remotely actuated cross-connection arrangement **characterised by**:
a first sparse cross-bar arrangement (26) having first connection lines connected to the plurality of first transmission path input/output terminals (20) and second connection lines connected to the plurality of second transmission path input/output terminals (22) and a plurality of first switch elements (24) for connecting selective ones of the first connection lines to selective ones of the second connection lines,
a second sparse cross-bar arrangement (27) having third connection lines connected to at least some of the first connection lines, and fourth connection lines and a plurality of second switch elements (25) for connecting selective ones of the third connection lines to selective ones of the fourth connection lines, and
at least a third sparse cross-bar arrangement (28) having fifth connection lines connected to at least some of the fourth connection lines, and sixth connection lines and a plurality of third switch elements for connecting selective ones of the fifth connection lines to selective one of the sixth connection lines, the device having selectable connecting paths between the sixth connection lines and at least some of the second transmission path input/output terminals (22), whereby the total number of switching elements for the at least first to third sparse cross-bar arrangements is less than N x M.

2. The cross-connect device of claim 1, further **characterised by** at least a fourth sparse cross-bar arrangement (29) having seventh connection lines connected to at least some of the sixth connection lines, and eighth connection lines and a plurality of fourth switch elements for connecting selective ones of the seventh connection lines to selective ones of the eighth connection lines, the eighth connection lines being connected to at least some of the second connection lines, whereby the total number of switching elements of the first to fourth sparse cross-bar is less than N x M.

3. The cross-connect device according to claim 1 or 2 **characterised in that** the total number of switching elements is less than 50%, less than 40%, less than 30%, or less than 20% of N x M.

4. The cross-connect device of any previous claim **characterised in that** there are S third lines and T fourth lines, U fifth lines and V sixth lines and the relationships between N, M, S, T, U, and V are:
S is less than or equal to N,
T is less than or equal to S,
U or V are less than or equal to T.

5. The cross-connect device according to claim 5, **characterised in that** there are W seventh lines and X eighth lines, and W and X are less than or equal to T.

6. The cross-connect device according to claim 4 or 5, **characterised in that** S is less than N and for the first connection lines which are not connected to the second sparse cross-bar arrangement (27), connections to the second transmission path input/output terminals (22) is only possible using the first switching elements (24).

7. The cross-connect device of any previous claim, **characterised in that** the second sparse cross-bar arrangement (27) has first and second non-overlapping sets of fourth connection lines and each third connection line can be connected to a fourth connection line in either the first or second sets by the second switching elements (25).

8. The cross-connect device of claim 7, **characterised in that** the third and fourth sparse cross-bar arrangements (28, 29) if present are adapted so that a fourth connection line from the first set can be connected to a third set of the second transmission path input/output terminals (22) and a fourth connection line from the second set can be connected to a fourth set of the second transmission path input/output terminals (22).

9. The cross-connect device according to any previous claim, **characterised in that** the device is adapted to implement a non-blocking rerouting by an automatic process.

10. The cross-connect device according to claim 9, **characterised in that** the non-blocking rerouting is by rearrangement.

11. The cross-connect device of claim 10, **characterised in that** the rearrangement is a chain of rearrangements.

12. The cross-connect device according to any previous claim arranged to bridge the connection between a subscriber terminal and a telecommunications service.

13. A cross-connect device according to any previous claim, **characterised in that** one or more of the first transmission path input/output terminals (20) are arranged to provide connection to subscriber transmission lines.

14. A cross-connect device according to any of the previous claims, **characterised in that** one or more of the second transmission path input/output terminals (22) are arranged to provide connection for service transmission lines.

15. A method of adapting in situ a telecommunications network apparatus, the apparatus having a plurality of N first transmission path input/output terminals (20) and a plurality of M second transmission path input/output terminals (22), and the device having a remotely actuated cross-connection arrangement comprising:
a first sparse cross-bar arrangement (26) having first connection lines connected to the plurality of first transmission path input/output terminals (20) and second connection lines connected to the plurality of second transmission path input/output terminals (22) and a plurality of first switch elements (24) for connecting selective ones of the first connection lines to selective ones of the second connection lines,
a second sparse cross-bar arrangement (27) having third connection lines connected to at least some of the first connection lines, and fourth connection lines and a plurality of second switch elements (25) for connecting selective ones of the third connection lines to selective ones of the fourth connection lines, and
at least a third sparse cross-bar arrangement (27) having fifth connection lines connected to at least some of the fourth connection lines, and sixth connection lines and a plurality of third switch elements for connecting selective ones of the fifth connection lines to selective one of the sixth connection lines, the arrangement having selectable connecting paths between the sixth connection lines and at least some of the second transmission path input/output terminals (22), the method comprising:
activating a first switching element (24) to provide a first connection path between a first transmission path input/output terminal (20) and a second transmission path input/output terminal (22),
and if this is not possible, activating selective ones of the second to at least third switching elements to provide a second connection path between a first transmission path input/output terminal (20) and a second transmission path input/output terminal (22).

16. The method of claim 15, further **characterised by**: providing as a routing option: determining if there is an idle second transmission path input/output terminal (22) and if so, determining if this idle second transmission path input/output terminal (22) can be connected to a busy first transmission path input/output terminal (20) through a third connection path, and if so rearranging the busy first transmission path input/output terminal (20) to be connected to the idle second transmission path input/output terminal (22) via the third connection path followed by activating selective ones of the first to at least third switching elements to provide the second connection path between a first transmission path input/output terminal (20) and a second transmission path input/output terminal (22).

17. The method of claim 16, further **characterised by**: providing as a routing option, selecting a busy first transmission path input/output terminal (20) and selecting another first switching element (24) to provide the first connection to a second transmission path input/output terminal (22), and activating a first switching element (24) to provide the first connection path between a first transmission path input/output terminal (20) and a second transmission path input/output terminal (22),
and, if this is not possible, activating selective ones of the second to at least third switching elements to provide the second connection path between a first transmission path input/output terminal (20) and a second transmission path input/output terminal (22).

18. The method of claim 17, further **characterised by**: providing a routing option of determining if there is an idle second transmission path input/output terminal (22) and if so, determining if this idle second transmission path input/output terminal (22) can be connected to a busy first transmission path input/output terminal (20) through a third connection path, and if so rearranging the busy first transmission path input/output terminal (20) to be connected to the idle second transmission path input/output terminal (22) via the third connection path followed by activating selective ones of the first to at least third switching elements to provide the first or second connection path between a first transmission path input/output terminal (20) and a second transmission path input/output terminal (22).

19. The method of claim 15, further **characterised by**: providing a routing option of selecting a busy a first transmission path input/output terminal (20) and de-selecting the first switching element (24) which provides the connection of the busy first transmission path input/output terminal (20) to a second transmission path input/output terminal (22), and activating second to at least third switching elements to provide the connection path between the busy first transmission path input/output terminal (20) and a second transmission path input/output terminal (22), followed by
activating selective ones of the first to at least third switching elements to provide the first or second connection path between a first transmission path input/output terminal (20) and a second transmission path input/output terminal (22).

20. The method of claim 15, **characterised in that** providing the first or second connection includes a chain of rearrangments in which more than one rearrangement of the activation of switching elements is carried out in the second sparse cross-bar (27).

21. Computer program product comprising code segments for carrying out any of the methods of claims 15 to 20.

22. The computer program product of claim 21 stored on a machine readable storage medium.

23. A telecommunications system comprising a device according to any of claims 1 to 14.

## Patentansprüche

1. Schaltverteilervorrichtung mit einer Vielzahl von N Erstübertragungsweg-Eingangs-/Ausgangsanschlüssen (20) und einer Vielzahl von M Zweitübertragungsweg-Eingangs-/Ausgangsanschlüssen (22), wobei die Vorrichtung eine fernbetätigte Kreuzschaltungsanordnung hat, **gekennzeichnet durch**:
eine erste schwach belegte Kreuzschienenanordnung (26) mit ersten Verbindungsleitungen, die mit der Vielzahl von Erstübertragungsweg-Eingangs-/Ausgangsanschlüssen (20) verbunden sind, und zweiten Verbindungsleitungen, die mit der Vielzahl von Zweitübertragungsweg-Eingangs-/Ausgangsanschlüssen (22) und einer Vielzahl von ersten Schalterelementen (24) verbunden sind, zum Verbinden von selektiven der ersten Verbindungsleitungen mit selektiven der zweiten Verbindungsleitungen,
eine zweite schwach belegte Kreuzschienenanordnung (27) mit dritten Verbindungsleitungen, die mit zumindest einigen der ersten Verbindungsleitungen verbunden sind, und vierten Verbindungsleitungen und einer Vielzahl von zweiten Schalterelementen (25) zum Verbinden von selektiven der dritten Verbindungsleitungen mit selektiven der vierten Verbindungsleitungen, und
zumindest eine dritte schwach belegte Kreuzschienenanordnung (28) mit fünften Verbindungsleitungen, die mit zumindest einigen der vierten Verbindungsleitungen verbunden sind, und sechsten Verbindungsleitungen und einer Vielzahl von dritten Schalterelementen zum Verbinden von selektiven der fünften Verbindungsleitungen mit einer selektiven der sechsten Verbindungsleitungen, wobei die Vorrichtung auswählbare Verbindungswege zwischen den sechsten Verbindungsleitungen und zumindest einigen der Zweitübertragungsweg-Eingangs-/Ausgangsanschlüsse (22) hat, wodurch die Gesamtzahl von Schaltelementen für die mindestens erste bis dritte schwach belegte Kreuzschienenanordnung kleiner als N × M ist.

2. Schaltverteilervorrichtung nach Anspruch 1, ferner **gekennzeichnet durch** mindestens eine vierte schwach belegte Kreuzschienenanordnung (29) mit siebenten Verbindungsleitungen, die mit zumindest einigen der sechsten Verbindungsleitungen verbunden sind, und achten Verbindungsleitungen und einer Vielzahl von vierten Schalterelementen zum Verbinden von selektiven der siebenten Verbindungsleitungen mit selektiven der achten Verbindungsleitungen, wobei die achten Verbindungsleitungen mit zumindest einigen der zweiten Verbindungsleitungen verbunden sind, wodurch die Gesamtzahl von Schaltelementen der ersten bis vierten schwach belegten Kreuzschiene kleiner als N × M ist.

3. Schaltverteilervorrichtung nach Anspruch 1 oder 2, **dadurch gekennzeichnet, daß** die Gesamtzahl von Schaltelementen kleiner als 50%, kleiner als 40%, kleiner als 30% oder kleiner als 20% von N × M ist.

4. Schaltverteilervorrichtung nach einem der vorhergehenden Ansprüche, **dadurch gekennzeichnet, daß** S dritte Leitungen und T vierte Leitungen, U fünfte Leitungen und V sechste Leitungen vorhanden sind und die Beziehungen zwischen N, M, S, T, U und V folgende sind:
S ist kleiner oder gleich N,
T ist kleiner oder gleich S,
U oder V sind kleiner oder gleich T.

5. Schaltverteilervorrichtung nach Anspruch 5, **dadurch gekennzeichnet, daß** W siebente Leitungen und X achte Leitungen vorhanden sind und W und X kleiner oder gleich T sind.

6. Schaltverteilervorrichtung nach Anspruch 4 oder 5, **dadurch gekennzeichnet, daß** S kleiner als N ist und für die ersten Verbindungsleitungen, die nicht mit der zweiten schwach belegten Kreuzschienenanordnung (27) verbunden sind, Verbindungen zu den Zweitübertragungsweg-Eingangs-/Ausgangsanschlüssen (22) nur unter Verwendung der ersten Schaltelemente (24) möglich sind.

7. Schaltverteilervorrichtung nach einem der vorhergehenden Ansprüche, **dadurch gekennzeichnet, daß** die zweite schwach belegte Kreuzschienenanordnung (27) erste und zweite einander nicht überschneidende Mengen von vierten Verbindungsleitungen hat und jede dritte Verbindungsleitung mit einer vierten Verbindungsleitung entweder in der ersten oder in der zweiten Menge durch die zweiten Schaltelemente (25) verbunden werden kann.

8. Schaltverteilervorrichtung nach Anspruch 7, **dadurch gekennzeichnet, daß** die dritte und die vierte schwach belegte Kreuzschienenanordnung (28, 29), wenn vorhanden, so angepaßt sind, daß eine vierte Verbindungsleitung aus der ersten Menge mit einer dritten Menge der Zweitübertragungsweg-Eingangs-/Ausgangsanschlüsse (22) verbunden werden kann und eine vierte Verbindungsleitung aus der zweiten Menge mit einer vierten Menge der Zweitübertragungsweg-Eingangs-/Ausgangsanschlüsse (22) verbunden werden kann.

9. Schaltverteilervorrichtung nach einem der vorhergehenden Ansprüche, **dadurch gekennzeichnet, daß** die Vorrichtung dafür eingerichtet ist, eine blockierungsfreie Umleitung durch einen automatischen Prozeß zu implementieren.

10. Schaltverteilervorrichtung nach Anspruch 9, **dadurch gekennzeichnet, daß** die blockierungsfreie Umleitung durch Umordnung erfolgt.

11. Schaltverteilervorrichtung nach Anspruch 10, **dadurch gekennzeichnet, daß** die Umordnung eine Kette von Umordnungen ist.

12. Schaltverteilervorrichtung nach einem der vorhergehenden Ansprüche, dafür eingerichtet, die Verbindung zwischen einem Teilnehmerendgerät und einem Telekommunikationsdienst durch Brückung zu schließen.

13. Schaltverteilervorrichtung nach einem der vorhergehenden Ansprüche, **dadurch gekennzeichnet, daß** einer oder mehrere der Erstübertragungsweg-Eingangs-/Ausgangsanschlüsse (20) dafür eingerichtet sind, Verbindung zu Teilnehmer-Übertragungsleitungen herzustellen.

14. Schaltverteilervorrichtung nach einem der vorhergehenden Ansprüche, **dadurch gekennzeichnet, daß** einer oder mehrere der Zweitübertragungsweg-Eingangs-/Ausgangsanschlüsse (22) dafür eingerichtet sind, Verbindung für Dienst-Übertragungsleitungen herzustellen.

15. Verfahren zum Anpassen einer Telekommunikationsnetzwerk-Vorrichtung vor Ort, wobei die Vorrichtung eine Vielzahl von N Erstübertragungsweg-Eingangs-/Ausgangsanschlüssen (20) und eine Vielzahl von M Zweitübertragungsweg-Eingangs-/Ausgangsanschlüssen (22) hat und die Vorrichtung eine fembetätigte Kreuzschaltungsanordnung hat, umfassend:
eine erste schwach belegte Kreuzschienenanordnung (26) mit ersten Verbindungsleitungen, die mit der Vielzahl von Erstübertragungsweg-Eingangs-/Ausgangsanschlüssen (20) verbunden sind, und zweiten Verbindungsleitungen, die mit der Vielzahl von Zweitübertragungsweg-Eingangs-/Ausgangsanschlüssen (22) und einer Vielzahl von ersten Schalterelementen (24) zum Verbinden von selektiven der ersten Verbindungsleitungen mit selektiven der zweiten Verbindungsleitungen verbunden sind,
eine zweite schwach belegte Kreuzschienenanordnung (27) mit dritten Verbindungsleitungen, die mit zumindest einigen der ersten Verbindungsleitungen verbunden sind, und vierten Verbindungsleitungen und einer Vielzahl von zweiten Schalterelementen (25) zum Verbinden von selektiven der dritten Verbindungsleitungen mit selektiven der vierten Verbindungsleitungen, und
zumindest eine dritte schwach belegte Kreuzschienenanordnung (28) mit fünften Verbindungsleitungen, die mit zumindest einigen der vierten Verbindungsleitungen verbunden sind, und sechsten Verbindungsleitungen und einer Vielzahl von dritten Schalterelementen zum Verbinden von selektiven der fünften Verbindungsleitungen mit einer selektiven der sechsten Verbindungsleitungen, wobei die Vorrichtung auswählbare Verbindungswege zwischen den sechsten Verbindungsleitungen und zumindest einigen der Zweitübertragungsweg-Eingangs-/Ausgangsanschlüsse (22) hat, wobei das Verfahren umfaßt:
Aktivieren eines ersten Schaltelements (24), um einen ersten Verbindungsweg zwischen einem Erstübertragungsweg-Eingangs-/Ausgangsanschluß (20) und einem Zweitübertragungsweg-Eingangs-/Ausgangsanschluß (22) bereitzustellen,
und wenn dies nicht möglich ist, Aktivieren von selektiven der zweiten bis mindestens dritten Schaltelemente, um einen zweiten Verbindungsweg zwischen einem Erstübertragungsweg-Eingangs-/Ausgangsanschluß (20) und einem Zweitübertragungsweg-Eingangs-/Ausgangsanschluß (22) bereitzustellen.

16. Verfahren nach Anspruch 15, ferner **gekennzeichnet durch**: Bereitstellen als eine Leitweglenkungsoption:
Bestimmen, ob ein freier Zweitübertragungsweg-Eingangs-/Ausgangsanschluß (22) vorhanden ist, und wenn ja, Bestimmen, ob dieser freie Zweitübertragungsweg-Eingangs-/Ausgangsanschluß (22) mit einem belegten Erstübertragungsweg-Eingangs-/Ausgangsanschluß (20) über einen dritten Verbindungsweg verbunden werden kann, und wenn ja, Umgruppieren des belegten Erstübertragungsweg-Eingangs-/Ausgangsanschlusses (20), um mit dem freien Zweitübertragungsweg-Eingangs-/Ausgangsanschluß (22) über den dritten Verbindungsweg verbunden zu werden, gefolgt von Aktivieren von selektiven der ersten bis mindestens dritten Schaltelemente, um den zweiten Verbindungsweg zwischen einem Erstübertragungsweg-Eingangs-/Ausgangsanschluß (20) und einem Zweitübertragungsweg-Eingangs-/Ausgangsanschluß (22) bereitzustellen.

17. Verfahren nach Anspruch 16, ferner **gekennzeichnet durch**: Bereitstellen als eine Leitweglenkungsoption:
Auswählen eines belegten Erstübertragungsweg-Eingangs-/Ausgangsanschlusses (20) und Auswählen eines anderen ersten Schaltelements (24), um die erste Verbindung zu einem Zweitübertragungsweg-Eingangs-/Ausgangsanschluß (22) bereitzustellen, und Aktivieren eines ersten Schaltelements (24), um den ersten Verbindungsweg zwischen einem Erstübertragungsweg-Eingangs-/Ausgangsanschluß (20) und einem Zweitübertragungsweg-Eingangs-/Ausgangsanschluß (22) bereitzustellen,
und, wenn dies nicht möglich ist, Aktivieren von selektiven der zweiten bis mindestens dritten Schaltelemente, um den zweiten Verbindungsweg zwischen einem Erstübertragungsweg-Eingangs-/Ausgangsanschluß (20) und einem Zweitübertragungsweg-Eingangs-/Ausgangsanschluß (22) bereitzustellen.

18. Verfahren nach Anspruch 17, ferner **gekennzeichnet durch**: Bereitstellen einer Leitweglenkungsoption wie folgt:
Bestimmen, ob ein freier Zweitübertragungsweg-Eingangs-/Ausgangsanschluß (22) vorhanden ist, und wenn ja, Bestimmen, ob dieser freie Zweitübertragungsweg-Eingangs-/Ausgangsanschluß (22) mit einem belegten Erstübertragungsweg-Eingangs-/Ausgangsanschluß (20) über einen dritten Verbindungsweg verbunden werden kann, und wenn ja, Umgruppieren des belegten Erstübertragungsweg-Eingangs-/Ausgangsanschlusses (20), um mit dem freien Zweitübertragungsweg-Eingangs-/Ausgangsanschluß (22) über den dritten Verbindungsweg verbunden zu werden, gefolgt von Aktivieren von selektiven der ersten bis mindestens dritten Schaltelemente, um den ersten oder zweiten Verbindungsweg zwischen einem Erstübertragungsweg-Eingangs-/Ausgangsanschluß (20) und einem Zweitübertragungsweg-Eingangs-/Ausgangsanschluß (22) bereitzustellen.

19. Verfahren nach Anspruch 15, ferner **gekennzeichnet durch**: Bereitstellen einer Leitweglenkungsoption wie folgt:
Auswählen eines belegten Erstübertragungsweg-Eingangs-/Ausgangsanschlusses (20) und Zurücknehmen der Auswahl des ersten Schaltelements (24), das die Verbindung des belegten Erstübertragungsweg-Eingangs-/Ausgangsanschlusses (20) mit einem Zweitübertragungsweg-Eingangs-/Ausgangsanschluß (22) herstellt, und Aktivieren zweiter bis mindestens dritter Schaltelemente, um den Verbindungsweg zwischen dem belegten Erstübertragungsweg-Eingangs-/Ausgangsanschluß (20) und einem Zweitübertragungsweg-Eingangs-/Ausgangsanschluß (22) bereitzustellen, gefolgt **durch**:
Aktivieren von selektiven der ersten bis mindestens dritten Schaltelemente, um den ersten oder zweiten Verbindungsweg zwischen einem Erstübertragungsweg-Eingangs-/Ausgangsanschluß (20) und einem Zweitübertragungsweg-Eingangs-/Ausgangsanschluß (22) bereitzustellen.

20. Verfahren nach Anspruch 15, **dadurch gekennzeichnet, daß** das Bereitstellen der ersten oder zweiten Verbindung eine Kette von Umordnungen aufweist, in der mehr als eine Umordnung der Aktivierung von Schaltelementen in der zweiten schwach belegten Kreuzschienenanordnung (27) durchgeführt wird.

21. Computerprogrammerzeugnis, umfassend Codesegmente zum Durchführen eines der Verfahren nach den Ansprüchen 15 bis 20.

22. Computerprogrammerzeugnis nach Anspruch 21, gespeichert auf einem maschinenlesbaren Speichermedium.

23. Telekommunikationssystem, umfassend eine Vorrichtung nach einem der Ansprüche 1 bis 14.

## Revendications

1. Dispositif d'interconnexion comportant une pluralité de N premières bornes d'entrée/sortie de trajet de transmission (20) et une pluralité de M deuxièmes bornes d'entrée/sortie de trajet de transmission (22), le dispositif comportant un agencement d'interconnexion actionné à distance **caractérisé par** :
un premier agencement de barres croisées clairsemé (26) ayant des premières lignes de connexion connectées à la pluralité de premières bornes d'entrée/sortie de trajet de transmission (20) et des deuxièmes lignes de connexion connectées à la pluralité de deuxièmes bornes d'entrée/sortie de trajet de transmission (22) et une pluralité de premiers éléments de commutation (24) pour connecter des lignes sélectives parmi les premières lignes de connexion à des lignes sélectives parmi les deuxièmes lignes de connexion,
un deuxième agencement de barres croisées clairsemé (27) ayant des troisièmes lignes de connexion connectées à au moins certaines des premières lignes de connexion, et des quatrièmes lignes de connexion et une pluralité de deuxièmes éléments de commutation (25) pour connecter des lignes sélectives parmi les troisièmes lignes de connexion à des lignes sélectives parmi les quatrièmes lignes de connexion, et
au moins un troisième agencement de barres croisées clairsemé (28) ayant des cinquièmes lignes de connexion connectées à au moins certaines des quatrièmes lignes de connexion, et des sixièmes lignes de connexion et une pluralité de troisièmes éléments de commutation pour connecter des lignes sélectives parmi les cinquièmes lignes de connexion à des lignes sélectives parmi les sixièmes lignes de connexion, le dispositif ayant des trajets de connexion pouvant être sélectionnés entre les sixièmes lignes de connexion et au moins certaines des deuxièmes bornes d'entrée/sortie de trajet de transmission (22), par le biais duquel le nombre total d'éléments de commutation pour lesdits au moins premier à troisième agencements de barres croisées clairsemés est inférieur à N x M.

2. Dispositif d'interconnexion selon la revendication 1, **caractérisé en outre par** au moins un quatrième agencement de barres croisées clairsemé (29) ayant des septièmes lignes de connexion connectées à au moins certaines des sixièmes lignes de connexion, et des huitièmes lignes de connexion et une pluralité de quatrièmes éléments de commutation pour connecter des lignes sélectives parmi les septièmes lignes de connexion à des lignes sélectives parmi les huitièmes lignes de connexion, les huitièmes lignes de connexion étant connectées à au moins certaines des deuxièmes lignes de connexion, par le biais duquel le nombre total d'éléments de commutation des premier à quatrième agencements de barres croisées clairsemés est inférieur à N x M.

3. Dispositif d'interconnexion selon la revendication 1 ou 2, **caractérisé en ce que** le nombre total d'éléments de commutation est inférieur à 50 %, inférieur à 40 %, inférieur à 30 %, ou inférieur à 20 % de NxM.

4. Dispositif d'interconnexion selon l'une quelconque des revendications précédentes, **caractérisé en ce qu'**il y a S troisièmes lignes et T quatrièmes lignes, U cinquièmes lignes et V sixièmes lignes et les relations entre N, M, S, T, U et V sont :
S est inférieur ou égal à N,
T est inférieur ou égal à S,
U ou V est inférieur ou égal à T.

5. Dispositif d'interconnexion selon la revendication 5, **caractérisé en ce qu'**il y a W septièmes lignes et X huitièmes lignes, et W et X sont inférieurs ou égaux à T.

6. Dispositif d'interconnexion selon la revendication 4 ou 5, **caractérisé en ce que** S est inférieur à N et, pour les premières lignes de connexion qui ne sont pas connectées au deuxième agencement de barres croisées clairsemé (27), des connexions aux deuxièmes bornes d'entrée/sortie de trajet de transmission (22) ne sont possibles qu'en utilisant les premiers éléments de commutation (24).

7. Dispositif d'interconnexion selon l'une quelconque des revendications précédentes, **caractérisé en ce que** le deuxième agencement de barres croisées clairsemé (27) a des premier et deuxième ensembles non superposés de quatrièmes lignes de connexion et chaque troisième ligne de connexion peut être connectée à une quatrième ligne de connexion soit dans le premier, soit dans le deuxième ensemble par les deuxièmes éléments de commutation (25).

8. Dispositif d'interconnexion selon la revendication 7, **caractérisé en ce que** les troisième et quatrième agencements de barres croisées clairsemés (28, 29), s'ils sont présents, sont adaptés de sorte qu'une quatrième ligne de connexion du premier ensemble puisse être connectée à un troisième ensemble des deuxièmes bornes d'entrée/sortie de trajet de transmission (22) et qu'une quatrième ligne de connexion du deuxième ensemble puisse être connectée à un quatrième ensemble des deuxièmes bornes d'entrée/sortie de trajet de transmission (22).

9. Dispositif d'interconnexion selon l'une quelconque des revendications précédentes, **caractérisé en ce que** le dispositif est adapté pour effectuer un réacheminement non bloquant par un processus automatique.

10. Dispositif d'interconnexion selon la revendication 9, **caractérisé en ce que** le réacheminement non bloquant est effectué par réagencement.

11. Dispositif d'interconnexion selon la revendication 10, **caractérisé en ce que** le réagencement est une chaîne de réagencements.

12. Dispositif d'interconnexion selon l'une quelconque des revendications précédentes agencé pour ponter la connexion entre un terminal d'abonné et un service de télécommunication.

13. Dispositif d'interconnexion selon l'une quelconque des revendications précédentes, **caractérisé en ce qu'**une ou plusieurs des premières bornes d'entrée/sortie de trajet de transmission (20) sont agencées pour fournir une connexion à des lignes de transmission d'abonnés.

14. Dispositif d'interconnexion selon l'une quelconque des revendications précédentes, **caractérisé en ce qu'**une ou plusieurs des deuxièmes bornes d'entrée/sortie de trajet de transmission (22) sont agencées pour fournir une connexion pour des lignes de transmission de service.

15. Procédé d'adaptation in situ d'un appareil de réseau de télécommunication, l'appareil comportant une pluralité de N premières bornes d'entrée/sortie de trajet de transmission (20) et une pluralité de M deuxièmes bornes d'entrée/sortie de trajet de transmission (22), et le dispositif comportant un agencement d'interconnexion actionné à distance comprenant :
un premier agencement de barres croisées clairsemé (26) ayant des premières lignes de connexion connectées à la pluralité de premières bornes d'entrée/sortie de trajet de transmission (20) et des deuxièmes lignes de connexion connectées à la pluralité de deuxièmes bornes d'entrée/sortie de trajet de transmission (22) et une pluralité de premiers éléments de commutation (24) pour connecter des lignes sélectives parmi les premières lignes de connexion à des lignes sélectives parmi les deuxièmes lignes de connexion,
un deuxième agencement de barres croisées clairsemé (27) ayant des troisièmes lignes de connexion connectées à au moins certaines des premières lignes de connexion, et des quatrièmes lignes de connexion et une pluralité de deuxièmes éléments de commutation (25) pour connecter des lignes sélectives parmi les troisièmes lignes de connexion à des lignes sélectives parmi les quatrièmes lignes de connexion, et
au moins un troisième agencement de barres croisées clairsemé (28) ayant des cinquièmes lignes de connexion connectées à au moins certaines des quatrièmes lignes de connexion, et des sixièmes lignes de connexion et une pluralité de troisièmes éléments de commutation pour connecter des lignes sélectives parmi les cinquièmes lignes de connexion à des lignes sélectives parmi les sixièmes lignes de connexion, le dispositif ayant des trajets de connexion pouvant être sélectionnés entre les sixièmes lignes de connexion et au moins certaines des deuxièmes bornes d'entrée/sortie de trajet de transmission (22), le procédé comprenant :
l'activation d'un premier élément de commutation (24) pour fournir un premier trajet de connexion entre une première borne d'entrée/sortie de trajet de transmission (20) et une deuxième borne d'entrée/sortie de trajet de transmission (22),
et si ce n'est pas possible, l'activation d'éléments sélectifs parmi les deuxièmes à au moins troisièmes éléments de commutation pour fournir un deuxième trajet de connexion entre une première borne d'entrée/sortie de trajet de transmission (20) et une deuxième borne d'entrée/sortie de trajet de transmission (22).

16. Procédé selon la revendication 15, **caractérisé en outre par** : la prévision, en tant qu'option d'acheminement, de la détermination s'il y a une deuxième borne d'entrée/sortie de trajet de transmission (22) libre et, si c'est le cas, de la détermination si cette deuxième borne d'entrée/sortie de trajet de transmission (22) libre peut être connectée à une première borne d'entrée/sortie de trajet de transmission (20) occupée par l'intermédiaire d'un troisième trajet de connexion et, si c'est le cas, du réagencement de la première borne d'entrée/sortie de trajet de transmission (20) occupée pour qu'elle soit connectée à la deuxième borne d'entrée/sortie de trajet de transmission (22) libre par l'intermédiaire du troisième trajet de connexion suivi de l'activation d'éléments sélectifs parmi les premiers à au moins troisièmes éléments de commutation pour fournir le deuxième trajet de connexion entre une première borne d'entrée/sortie de trajet de transmission (20) et une deuxième borne d'entrée/sortie de trajet de transmission (22).

17. Procédé selon la revendication 16, **caractérisé en outre par** : la prévision, en tant qu'option d'acheminement, de la sélection d'une première borne d'entrée/sortie de trajet de transmission (20) occupée et de la sélection d'un autre premier élément de commutation (24) pour fournir la première connexion à une deuxième borne d'entrée/sortie de trajet de transmission (22), et de l'activation d'un premier élément de commutation (24) pour fournir le premier trajet de connexion entre une première borne d'entrée/sortie de trajet de transmission (20) et une deuxième borne d'entrée/sortie de trajet de transmission (22),
et, si ce n'est pas possible, de l'activation d'éléments sélectifs parmi les deuxièmes à au moins troisièmes éléments de commutation pour fournir le deuxième trajet de connexion entre une première borne d'entrée/sortie de trajet de transmission (20) et une deuxième borne d'entrée/sortie de trajet de transmission (22).

18. Procédé selon la revendication 17, **caractérisé en outre par** : la prévision d'une option d'acheminement consistant à déterminer s'il y a une deuxième borne d'entrée/sortie de trajet de transmission (22) libre et, si c'est le cas, à déterminer si cette deuxième borne d'entrée/sortie de trajet de transmission (22) libre peut être connectée à une première borne d'entrée/sortie de trajet de transmission (20) occupée par l'intermédiaire d'un troisième trajet de connexion et, si c'est le cas, à réagencer la première borne d'entrée/sortie de trajet de transmission (20) occupée pour qu'elle soit connectée à la deuxième borne d'entrée/sortie de trajet de transmission (22) libre par l'intermédiaire du troisième trajet de connexion et ensuite à activer des éléments sélectifs parmi les premiers à au moins troisièmes éléments de commutation pour fournir le premier ou le deuxième trajet de connexion entre une première borne d'entrée/sortie de trajet de transmission (20) et une deuxième borne d'entrée/sortie de trajet de transmission (22).

19. Procédé selon la revendication 15, **caractérisé en outre par** : la prévision d'une option d'acheminement consistant à sélectionner une première borne d'entrée/sortie de trajet de transmission (20) occupée et désélectionner le premier élément de commutation (24) qui réalise la connexion de la première borne d'entrée/sortie de trajet de transmission (20) occupée à une deuxième borne d'entrée/sortie de trajet de transmission (22), et à activer des deuxièmes à au moins troisièmes éléments de commutation pour fournir le trajet de connexion entre la première borne d'entrée/sortie de trajet de transmission (20) occupée et une deuxième borne d'entrée/sortie de trajet de transmission (22), et ensuite
à activer des éléments sélectifs parmi les premiers à au moins troisièmes éléments de commutation pour fournir le premier ou le deuxième trajet de connexion entre une première borne d'entrée/sortie de trajet de transmission (20) et une deuxième borne d'entrée/sortie de trajet de transmission (22).

20. Procédé selon la revendication 15, **caractérisé en ce que** la prévision de la première ou de la deuxième connexion comprend une chaîne de réagencements dans laquelle plusieurs réagencements de l'activation des éléments de commutation sont effectués dans le deuxième agencement de barres croisées clairsemé (27).

21. Produit-programme d'ordinateur comprenant des segments de code pour exécuter l'un quelconque des procédés des revendications 15 à 20.

22. Produit-programme d'ordinateur selon la revendication 21 mémorisé sur un support de mémorisation pouvant être lu par une machine.

23. Système de télécommunication comprenant un dispositif selon l'une quelconque des revendications 1 à 14.
